(19) Europäisches Patentamt
European Patent Office
Office européen des brevets

(11) EP 0 856 025 B1

# (12) EUROPÄISCHE PATENTSCHRIFT

(45) Veröffentlichungstag und Bekanntmachung des Hinweises auf die Patenterteilung:
**15.01.2003 Patentblatt 2003/03**

(21) Anmeldenummer: **96937201.0**

(22) Anmeldetag: **18.10.1996**

(51) Int Cl.[7]: **C08G 63/60**, C08G 63/66, C08G 69/44, C09K 19/38, C09K 19/00, D01F 6/84

(86) Internationale Anmeldenummer:
**PCT/EP96/04549**

(87) Internationale Veröffentlichungsnummer:
**WO 97/014739 (24.04.1997 Gazette 1997/18)**

## (54) CHOLESTERISCHE PHASEN BILDENDE POLYMERE UND IHRE VERWENDUNG

CHOLESTERIC PHASE-FORMING POLYMERS AND THEIR USE

POLYMERES FORMANT DES PHASES CHOLESTERIQUES ET LEUR UTILISATION

(84) Benannte Vertragsstaaten:
**AT BE CH DE DK ES FI FR GB IE IT LI LU NL PT SE**

(30) Priorität: **18.10.1995 DE 19538700**

(43) Veröffentlichungstag der Anmeldung:
**05.08.1998 Patentblatt 1998/32**

(73) Patentinhaber: **Celanese Ventures GmbH
65926 Frankfurt am Main (DE)**

(72) Erfinder:
- **KREUDER, Willi
D-55126 Mainz (DE)**
- **SCHÖNFELD, Axel
D-65207 Wiesbaden (DE)**
- **CALUNDANN, Gordon
Short Hills, NJ 07078 (US)**

(56) Entgegenhaltungen:
**EP-A- 0 391 368 WO-A-96/25449**

- **MACROMOLECULAR: RAPID COMMUNICATIONS, Bd. 16, Nr. 4, 1.April 1995, Seiten 231-237, XP000489605 KRICHELDORF H R ET AL: "LIQUID-CRYSTALLINE POLYMIDES, 16A) CHIRAL THERMOTROPIC COPOLY(ESTER-IMIDE)S BASED ON ISOSORBIDE B) AND N-(4-CARBOXYPHENYL)TRIMELLITIMIDE" in der Anmeldung erwähnt**
- **ANGEWANDTE MAKROMOLEKULARE CHEMIE, Bd. 210, 1.August 1993, Seiten 173-196, XP000396024 BRAUN D ET AL: "GRAFTING OF POLYESTERS BY FREE-RADICAL CHAIN TRANSFER"**
- **MAKROMOLEKULARE CHEMIE, MACROMOLECULAR CHEMISTRY AND PHYSICS, Bd. 194, Nr. 1, 1.Januar 1993, Seiten 53-64, XP000334527 STORBECK R ET AL: "SYNTHESIS AND PROPERTIES OF HIGH-MOLECULAR-WEIGHT POLYESTERS BASED ON 1,4:3,6-DIANHYDROHEXITOLS AND TEREPHTHALIC ACID"**

EP 0 856 025 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung liegt auf dem Gebiet der flüssigkristallinen makromolekularen Verbindungen. Insbesondere betrifft die Erfindung Polymere und Oligomere, die cholesterische Phasen bilden können. Außerdem zeigt die Erfindung vorteilhafte Verfahren für die Herstellung solcher Substanzen auf. Darüberhinaus bezieht sich die Erfindung auch auf die Verwendung von cholesterischen Polymeren und Oligomeren.

Wie für formanisotrope Moleküle bekannt, können beim Erwärmen flüssigkristalline Phasen, sogenannte Mesophasen, auftreten (von griech. meso = dazwischen, bedeutet zwischen isotroper Flüssigkeit und anisotropem Kristall). Daher werden formanisotrope Moleküle auch als Mesogene (adj.: mesogen) bezeichnet, insbesondere bezeichnet Mesogen den starren Molekülteil, ohne die üblicherweise daran terminal fixierten Flügelgruppen bei niedermolekularen Flüssigkristallmolekülen bzw. flexiblen Spacersegmente bei semi-flexiblen flüssigkristallinen Hauptkettenpolymeren. Die einzelnen Mesophasen unterscheiden sich durch die räumliche Anordnung der Molekülschwerpunkte einerseits sowie durch die Molekülanordnung hinsichtlich der Längsachsen andererseits (G.W. Gray, P.A. Winsor, Liquid Crystals and Plastic Crystals, Ellis Horwood Limited, Chichester 1974). Die nematischflüssigkristalline Phase zeichnet sich dadurch aus, daß lediglich eine Orientierungsfernordnung durch Parallellagerung der Moleküllängsachsen existiert. Unter der Voraussetzung, daß die die nematische Phase aufbauenden Moleküle chiral sind, kann eine sogenannte cholesterische Phase entstehen, bei der die Längsachsen der Moleküle eine zu ihnen senkrechte, helixartige Überstruktur ausbilden (H. Baessler, Festkörperprobleme XI, 1971). Der chirale Molekülteil kann im flüssigkristallinen Molekül selbst enthalten sein oder aber als Dotierstoff zur nematischen Phase gegeben werden. Durch Dotierung erzeugte Phasen werden als induzierte cholesterische Phasen bezeichnet. Dieses Phänomen wurde zuerst an Cholesterolderivaten untersucht (H. Baessler, M.M. Labes, J. Chem. Phys. 52 (1970) 631; H. Baessler, T. M. Laronge, M. M. Labes, J. Chem. Phys. 51 (1969) 3213; H. Finkelmann, H. Stegemeyer, Z. Naturforschg. 28a (1973) 799). Später wurde die Induzierung cholesterischer Phasen auch durch Zusatz anderer chiraler Substanzen möglich, die selbst nicht flüssigkristallin sind (H. Stegemeyer, K.J. Mainusch, Naturwiss. 58 (1971) 599; H. Finkelmann, H. Stegemeyer, Ber. Bunsenges. Phys. Chem. 78 (1974) 869).

Die cholesterische Phase hat bemerkenswerte optische Eigenschaften, nämlich eine hohe optische Rotation sowie einen ausgeprägten Circulardichroismus, der durch Selektivreflexion von circularpolarisiertem Licht innerhalb der cholesterischen Phase entsteht. Die je nach Blickwinkel zu beobachtenden unterschiedlichen Farben sind abhängig von der Ganghöhe der helicalen Überstruktur, die Ihrerseits vom Verdrillungsvermögen der chiralen Komponente abhängt. Dabei kann insbesondere durch Änderung der Konzentration eines chiralen Dotierstoffes die Ganghöhe und damit der Wellenlängenbereich des selektiv-reflektierten Lichts einer cholesterischen Phase variiert werden (J.E. Adams, W.E.L. Haas, Mol. Cryst. Liq. Cryst. 16 (1972) 33).

Solche cholesterischen Systeme bieten für eine praktische Anwendung interessante Möglichkeiten.

Zum näheren Stand der Technik werden weiterhin folgende Druckschriften und Veröffentlichungen genannt:

D1 = US 4,410,570;
D2 = DE 42 40 743 A1;
D3 = EP-A-O 358 208;
D4 = EP-A-O 383 376;
D5 = DE 43 42 280 A1;
D6 = J. Watanabe, W.R. Krigbaum, J.Polym.Sci., Polym. Phys. Ed. 23 (1985), 565-574;
D7 = a)M. Ballauf et al., Makromol.Chem., 194,(1993) 53-64)
b)M. Ballauf et al., Polymer 34,(1993) 5003-6;
D8 = H.G. Elias, Makromoleküle, 5. Aufl., Hüthig und Wepf Verlag Basel, 1990, S.779,780; und
D9 = JP-A-6-186534.

In der D1 werden cholesterische Phasen bildende Cyclosiloxane beschrieben, die Seitenketten tragen können, welche sich drei Kategorien zuordnen lassen. Zum einen handelt es sich bei den Seitenketten um übliche (monofunktionelle) Seitenketten-Mesogene. Behandelt werden aber auch (mesogene) Cholesterylester als Seitenketten. Schließlich werden (mesogene) Vinyl-Derivate, die polymerisations- und folglich vernetzungsfähig sind, vorgestellt. Die cholesterischen Siloxane gemäß D1 zeigen eine starke Temperaturabhängigkeit der Reflexionsfarbe, was in der Thermographie (Bsp. Mammographie) ausgenützt wird. Für die meisten Anwendungen ist diese Temperaturabhängigkeit der Reflexionsfarbe jedoch unerwünscht.

Die D2 offenbart Pigmente mit vom Betrachtungswinkel abhängiger Farbigkeit. Die Pigmente bestehen aus orientierten dreidimensional vernetzten Substanzen mit flüssigkristalliner Struktur mit chiraler Phase, welche gegebenenfalls in Mischung mit weiteren Farbstoffen und Pigmenten vorliegen können. Bei den dreidimensional vernetzbaren flüssigkristallinen Substanzen mit chiraler Phase handelt es sich um cholesterische Flüssigkristalle, die polymerisierbare, polykondensierbare oder einer Polyaddition zugängliche Gruppen, von denen zumindest ein Teil in Form von

di-, tri- oder höherfunktionellen Bausteinen vorliegt, enthalten. In der D2 werden als bevorzugte Substanzen dreidimensional vernetzbare Polyorganosiloxane genannt, wie sie z. B. Gegenstand der D3 sind. Stellvertretend für diese Verbindungsklasse wird gemäß D2 z.B. aus 4-(Prop-2-en-1-oxy)benzoesäurecholesterinester, 4-(Prop-2-en-1-oxy) benzoesäure(4-trimethylsiloxyphenyl)ester und Tetramethylcyclotetrasiloxan unter Verwendung von Dicyclopentadienplatindichlorid und anschließender Umsetzung mit p-Toluolsulfonsäure und Methacrylsäureanhydrid ein Polyorganosiloxan mit methacrylsäurehaltigen Seitenketten hergestellt.

Das für die Substanzen der D1 bestehende Problem löst die D2 durch eine sehr anspruchsvolle, schwierig durchführbare und teils auch recht aufwendig erscheinende Behandlung des aus der D1 bekannten Materials, welches die vinylischen Seitengruppen aufweist. Insbesondere wird bei der Behandlung der D2 das erhaltene Material durch dreidimensionale Vernetzung in einem Nicht-Gleichgewichtszustand fixiert. Dies ist die Ursache für eine Reihe von Nachteilen. Das vernetzte Material läßt sich nicht mehr umformen, es quillt in den meisten Lösungsmitteln und verliert dabei reversibel oder irreversibel seine Eigenschaften. Die gequollenen Materialien sind besonders in Form von Flittern oder Pigmenten mechanisch sensibel und werden unter Scherung ungünstig verändert.

Entsprechendes gilt für spezielle Ausführungsformen gemäß D4, die auf den gleichen cholesterischen Siloxanen beruhen.

Polymerisierbare chirale Verbindungen sind auch aus der D5 bekannt. Offenbart werden chirale Verbindungen, die mindestens eine zwei- oder mehrfach gebundene chirale Gruppe, mindestens eine polymerisierbare Gruppe, mindestens einen Spacer und mindestens eine mesogene Gruppe enthalten. Die von der D5 beanspruchten Verbindungen dienen als polymerisierbare, chirale Dotierstoffe zur Herstellung von cholesterischen Netzwerken und eignen sich zur Verwendung in elektro-optischen Anzeigen oder als chiraler Dotierstoff für nematische oder cholesterische Flüssigkristalle zur Erzeugung farbig reflektierender Schichten.

Um aus den gemäß D5 offenbarten "Monomeren" cholesterische Polymere mit hinreichend temperaturstabiler Selektivreflexion zu erhalten, ist eine dreidimensionale Vernetzung unverzichtbar. Daher haften den resultierenden cholesterische Phasen bildenden Polymeren genau dieselben Nachteile an wie den aus D2 bekannten Polymeren.

Neben den Schwierigkeiten im Zusammenhang mit der Schaffung von geeigneten Pigmenten bestehen weitere Probleme bei der Verarbeitung von flüssigkristallinen Hauptkettenpolymeren im allgemeinen. Wirtschaftlich bedeutsam ist nämlich unter anderem die Anwendung von Flüssigkristall-Polymeren (Liquid Crystal Polymers = LCP) aus sogenannten steifen oder semiflexiblen (worm-like) Hauptkettenpolymeren. Diese zeigen in der Regel die nematische LC-Phase und werden generell aus der Schmelze, z.B. durch Spritzguß oder Extrusion verarbeitet. Der nematische Zustand bietet Vorteile bei der thermoplastischen Verarbeitung gegenüber nicht-LC-Thermoplasten, weil sich die Moleküle im Strömungsfeld parallel orientieren, wodurch sich die apparente (scheinbare) Viskosität verringert. Dies führt vorteilhaft zu niedrigeren Spritz- und Nachdrücken und/oder kürzeren Cycluszeiten beim Formgebungs- und Verarbeitungsvorgang.

Die ausgeprägte Anisotropie führt jedoch auch zu Nachteilen bei den Materialeigenschaften, die daraus resultieren, daß der (kristalline) Werkstoff mit der nematischen Textur der Schmelze erstarrt. Dies äußert sich zwar in einer sehr guten Zugfestigkeit in Maschinenrichtung, jedoch tritt quer dazu sehr leicht ein faseriger Bruch auf, ähnlich wie bei splitterndem Holz. Es hat nicht an Versuchen gefehlt, diesen Nachteil zu beheben, z.B. durch aufwendige Spritzgußverfahren, insbesondere double gate oder gar triple gate injection, bei denen durch gezielte Verwirbelung der Schmelze versucht wird, diese ungünstigen Anisotropie-Effekte zu verringern. Dennoch ist es sehr wünschenswert, die bekannten Hauptketten-LCP auch nach weniger aufwendigen Verfahren verarbeiten zu können, ohne die Nachteile der anisotropen Werkstoffeigenschaften in Kauf nehmen zu müssen.

Bestimmte Verbindungen, die unter Verwendung chiraler Bausteine hergestellt wurden, sind bereits literaturbekannt, ohne jedoch dem Fachmann eine eindeutige technische Lehre zu vermitteln oder die Nützlichkeit der speziellen Verbindung zu offenbaren.

In D6 werden ein ein Homo- und Copolyester aus chiraler (+)-3-Methyladipinsäure, Azelainsäure, und 4,4'-Biphenol beschrieben. Die offenbarten Verbindungen selbst sind gleich mehrfach mit Nachteilen behaftet. Der lange aliphatische, chirale Spacer ist wegen seiner thermischen Labilität und Racemisierungstendenz ungeeignet. Bereits bei der Herstellung solcher Polyester treten Probleme durch mangelnde thermische Stabilität und Sublimation auf. Dies kann mehrere Ursachen haben. Einerseits kann die freie Säure, ihr cyclisches Anhydrid oder das korrespondierende, cylische Keton sublimieren. Dasselbe Phänomen kann wiederum während der thermoplastischen Verarbeitung zu unkontrollierbaren Veränderungen der Stoffparameter führen. Außerdem ist allgemein bekannt, daß solche langen Alkylensegmente schon bei Temperaturen von 200°C zu merklichen Autoxidationserscheinungen neigen, was durch (aufwendige) Inertgasatmosphäre-Techniken zwar zurückgedrängt, jedoch nicht völlig vermieden werden kann. Bei Temperaturen oberhalb ca. 300°C tritt selbst in Inertgasatmosphäre Zersetzung auf. Beides schränkt die technische Verwendbarkeit erheblich ein.

Weiterhin ist eine der Komponenten, nämlich Methyladipinsäure, schwer zugänglich. Dies alles steht, zusammen mit einer zu guten Löslichkeit des Polyesters in organischen Medien, einer technischen Verwendung entgegen.

Ballauff et al. beschreiben 1993 (D7) die Homopolyester von 1,4:3,6-Dianhydrohexitol mit Terephthalsäure.

Über cholesterische Phasen wird nichts berichtet, obwohl diese im allgemeinen bereits ohne Hilfsmittel durch irisierende Farben erkennbar wären. Ballauff et al. zitieren Thiem (J.Thiem, H. Lüders, Starch/Stärke, 36, 170-176 (1984)), der bereits vorher solche Terephthalate ebenfalls ohne Erwähnung einer cholesterischen Phase oder auch nur irgendwelcher besonderer optischen Phänomene beschrieb.

Weiterhin ist aus D8 bekannt (H.G. Elias, Makromoleküle, 5. Aufl., Hüthig und Wepf Verlag Basel, 1990, S. 779,780), daß cholesterische Mesogene durch Einführen kleiner Mengen chiraler Comonomerer in LC-Polymere gebildet werden, z. B. durch Cokondensation kleiner Mengen von Valin $H_2N-CH(CH(CH_3)_2)-COOH$ mit p-Aminobenzoesäure. Poly(p-aminosäure) bildet jedoch nur in Gegenwart von Lösungsmitteln wie HMPT, Schwefelsäure oder Methylsulfonsäure LC-Phasen aus, d.h. diese gehören zur Gruppe der lyotropen Mesophasen (von griech. lyos = lösen), womit ein technisch relevantes thermotropes Verhalten (d.h. ohne Anwesenheit eines Lösungsmittels, also auch im kristallinen Feststoff mit LC-Textur), wie dem Fachmann bekannt, ausgeschlossen werden kann.

Am selben Ort ist angegeben, daß durch Zusatz optisch aktiver Verbindungen zu lyotropen nematischen Mesophasen ebenfalls cholesterische Mesophasen erhalten werden, z. B. durch Zugabe von (+)-1-Methylcylohexanon zu Lösungen von Poly-p-benzamid. Dieser Effekt der Induktion einer chiralen lyotropen Phase läßt sich jedoch nur in Gegenwart eines Lösungsmittels beobachten, wodurch die technische Verwendbarkeit äußerst gering ist. Im Festkörper treten keine Phänomene auf, die im Zusammenhang mit dem chiralen Aufbau des Polymeren stehen.

Das Prinzip der Induktion cholesterischer Phasen durch chirale Comonomere oder (nicht chemisch gebundene) Dotierstoffe hat aber bei überwiegend starren, thermotropen Hauptketten-Polymeren bisher keine Beachtung gefunden.

Dies hängt vermutlich damit zusammen, daß es für einen Fachmann auf diesem Gebiet mehr als unwahrscheinlich ist, daß es gelingen könnte, chirale Molekülbausteine zu finden, die einerseits genügend temperaturstabil sind (ca. 300°C) und die andererseits genügend Verdrillungsvermögen besitzen.

Hinzu kommt, daß bei diesen Temperaturen die zunehmende thermische Energiebarriere ($k \cdot T$) überwunden werden muß. Dieser Umstand läßt den Fachmann das Erzeugen einer cholesterischen Phase nicht erwarten. In einfachen Worten bedeutet dies, daß es leicht erscheint, kurze Mesogene gegeneinander zu verdrillen, während es viel schwieriger erscheint, lange Mesogene zu verdrillen, weil dort mit wesentlich größeren elastischen Rückstellkräften zu rechnen ist. Bei den fast starren Hauptketten-LCP kann die Persistenzlänge des Makromoleküls als "langes Mesogen" betrachtet werden.

In der japanischen Offenlegungsschrift D9 werden cholesterische Hauptkettenpolyester beschrieben. Als chirale Komponente werden einerseits die von Watanabe (D6) benutzte Methyladipinsäure, deren Homologe, analoge Chlorderivate, bzw. die daraus jeweils durch Reduktion erhältlichen Diole oder andererseits chirales Amylhydrochinon beschrieben. Dies sind jedoch allesamt chirale Verbindungen, auf die das im Hinblick auf die technischen Nachteile bei D6 Gesagte ebenfalls zutrifft.

Weiterhin sind technisch eingesetzte LCP, wie Xydar® oder Vectra®, nur schwierig einzufärben. Es besteht jedoch ein stetig steigender Bedarf nach besser einfärbbaren Polymeren, insbesondere LCP. Primäre Gründe hierfür ergeben sich aus der Markierungswirkung von Einfärbungen. So können beispielsweise Verwechslungen, z.B. bei Steckverbindungen, vermieden werden, die häufig mit Kabeln vorgenommen werden müssen, deren Halterungen aus einem LCP bestehen. In der Fachwelt ist es bekannt, daß sich bisherige (nematische) LCP nur unzureichend einfärben lassen. Dispergierte Pigmente reichern sich an der Oberfläche an und ergeben einen unansehlichen, kreidigen Eindruck.

In der EP-A O 391 368 sind cholesterische Flüssigkristall-Polyester beschrieben, deren optisch aktive Komponente sich aus der allerdings sehr teuren Camphersäure herleitet. Auf den Farbeffekt, den solche Polymere zeigen, wird nicht weiter eingegangen.

In Macromol. Rapid Commun. 1995, 16, 231 sind chiral thermotropische Copolyesterimide beschrieben, von denen einige, allerdings erst bei Temperaturen von größer 300°C, eine Grand-Jean-Textur zeigen. Das Auftreten einer Farbe wird nicht beschrieben.

Angesichts des hierin angegebenen und diskutierten Standes der Technik lagen der Erfindung gleich mehrere Aufgaben zugrunde.

Zum einen war es Aufgabe der vorliegenden Erfindung, neue flüssigkristalline Polymere und Oligomere bereitzustellen, die bei sonst im wesentlichen unveränderten Eigenschaften verglichen mit bekannten Hauptketten-LCP eine weniger aufwendige Verarbeitung zu Formteilen im Spritzgießverfahren oder ähnlichen dem Fachmann geläufigen Verarbeitungsprozessen gestatten, insbesondere ohne eine Verschlechterung durch anisotrope Werkstoffeigenschaften in Kauf nehmen zu müssen.

Aufgabe der Erfindung war es auch, einen Werkstoff zu finden, der sich einerseits ähnlich leicht wie bisherige (nematische) LCP verarbeiten läßt, ohne die damit verbundenen Nachteile bezüglich anisotroper Werkstoffeigenschaften aufzuweisen.

Eine weitere Aufgabe der Erfindung ist in der Synthese neuer flüssigkristalliner Polymere zu sehen, welche im geeigneten Temperaturbereich cholesterische Phasen bilden und sich durch überragende Temperaturstabilität auszeichnen, wodurch eine thermoplastische Verarbeitung ermöglicht wird. Hierbei soll außerdem die Möglichkeit bestehen, einen für die Bearbeitung (Formung) geeigneten Aggregatzustand der Materie vorherzubestimmen. Insbesondere soll frei wählbar sein, ob das Polymer im isotropen (falls unzersetzt erreichbar), nematischen (falls unzersetzt erreichbar), cholesterischen oder kristallinen Zustand mit cholesterischer Textur (= Überstruktur) bearbeitet wird; mit Ausnahme des kristallinen Zustands, können die o.g. Zustände auch glasig erstarrt vorliegen und somit auch in diesem Zustand bearbeitet werden.

Ferner sollen die neuen Polymere in Abhängigkeit von den angestrebten Eigenschaften des bearbeiteten Zielproduktes und von den gewünschten Effekten auch in mehreren Schritten verarbeitbar sein, wobei es möglich sein soll, verschiedene Verarbeitungsschritte in verschiedenen Phasenbereichen durchzuführen.

Noch eine weitere der Erfindung zugrunde liegende Aufgabe, ist die Bereitstellung von zugleich technisch wie ästhetisch anspruchsvollen eingefärbten Werkstoffen, die über eine beliebigen flüssigkristallinen Zustand verarbeitet wurden.

Und noch eine weitere der Erfindung zugrunde liegende Aufgabe besteht in der Schaffung neuer Polymerer, die sich zur Herstellung von Pigmenten eignen, welche insbesondere in Lacken eingesetzt werden können, die zur Lackierung von Metall- und Kunststoffoberflächen, Oberflächen von Fahrzeugen und anderen Artikeln des allgemeinen oder industriellen Gebrauchs dienen. Insbesondere soll ein cholesterische Phasen bildendes Polymer einfach herstellbar sein, und es soll in einer breiten Palette von Lösungsmitteln nicht mehr quellen, so daß seine Eigenschaften stabil bleiben.

Mit bestimmten, cholesterische Phasen bildenden Polymere und Oligomeren, die als Molekülbausteine im wesentlichen aufweisen

A. mindestens einen bifunktionellen chiralen Molekülbaustein, der wenigstens ein von einer monosubstituierten p-Phenylengruppe verschiedenes cyclisches Strukturelement aufweist,

B. mindestens einen bifunktionellen achiralen oder racemischen Molekülbaustein, der wenigstens ein cyclisches Strukturelement aufweist, welches mindestens vier Ringglieder enthält, und

C. mindestens einen bifunktionellen Molekülbaustein, der beliebig chiral oder achiral, cyclisch oder acyclisch sein kann und von den tatsächlich eingesetzten Molekülbausteinen A und B verschieden ist,

gelingt es überraschenderweise, auf äußerst einfache und dennoch nicht ohne weiteres vorhersehbare Weise Materialien bereitzustellen, welche die oben diskutierten Nachteile des Standes der Technik nicht nur weitgehend vermeiden, sondern gleichzeitig enorme Vorteile mit sich bringen.

Ein Gegenstand der Erfindung sind daher cholesterische Phasen bildende Polymere und Oligomere, aufweisend als Molekülbausteine im wesentlichen

A. mindestens einen bifunktionellen chiralen Molekülbaustein, der wenigstens ein von der monosubstituierten p-Phenylengruppe verschiedenes cyclisches Strukturelementen aufweist,

B. mindestens einen bifunktionellen achiralen oder racemischen Molekülbaustein, der wenigstens ein cyclisches Struktruelement aufweist, welches mindestens vier Ringglieder enthält, und

C. mindestens einen bifunktionellen Molekülbaustein, der beliebig chiral oder achiral, cyclisch oder acyclisch sein kann und von den tatsächlich eingesetzten Molekülbausteinen A und B verschieden ist,

wobei die Molekülbausteine durch Estergruppierungen mit (C=O) = und O-C = O, Kohlensäureester mit O-(C = O)-O, Amidgruppen CONH, N-substituiertes Amid CONR, cyclisches Imid mit sechs Ringgliedern, Azomethine CH=N und CR=N verbunden sind, wobei der Rest R gleich oder verschieden $C_1$-$C_{22}$-Alkyl, -Aryl, -Aralkyl sein kann, wobei im Falle eines nicht cyclischen Restes oder im Falle des Vorliegens einer Kombination mit einem nicht cyclischen Restes der nicht cyclische Anteil linear oder verzweigt sein kann, und wobei sowohl lineare, verzweigte und/oder cyclische Reste mindestens ein von C und H verschiedenes Heteroatom enthalten können und/oder substituiert - auch heteroatomsubstituiert - sein können, wobei der Substituent insbesondere auch ein oder mehrere Halogen(e) tragen kann, mit der Maßgabe, daß sich der Molekülbaustein A nicht ausschließlich von Camphersäure ableitet.

Im einzelnen bieten die erfindungsgemäßen Polymere beispielsweise folgende Vorteile:

- Eine überraschend hohe allgemeine Thermostabilität bei höheren Temperaturen.
  Übliche LCP sind überwiegend aus aromatischen Bausteinen aufgebaut und sind an sich recht temperaturstabil. Dies gilt sogar für Umgebungsbedingungen und erst recht unter Inertgas. Überraschend sind die erfindungsgemäßen Polymere, die im weitesten Sinne nicht aromatische Strukturelemente enthalten, immer noch ähnlich stabil, obwohl hier der Fachmann mit verringerter Stabilität hätte rechnen müssen. Diese überraschend gute Thermostabilität erlaubt einen großen Verarbeitungsspielraum (= Verarbeitungsfenster), teilweise sogar ohne aufwendige Schutzgastechnik. Weiterhin erlaubt sie höhere Temperaturen bei einer eventuelllen Nachbearbeitung und beim späteren Gebrauch der aus den erfindungsgemäßen Polymeren erhaltenen Artikel.

- Eine überraschend hohe Thermostabilität bei tieferen Temperaturen.
  Einer allgemeinen Erfahrung folgend darf aus einer Stabilität bei erhöhten Temperaturen auf eine noch länger andauernde Stabilität bei tieferen, z.B. Umgebungstemperaturen, geschlossen, werden. Dieser Zusammenhang, der auf einem (modifizierten) Arrheniusansatz beruht, wird beispielsweise bei "forced aging" Untersuchungen ausgenutzt.

- Eine hohe Stabilität gegen Racemisierung.
  Die Racemisierung scheint - wenn überhaupt - in nur untergeordnetem Maße abzulaufen, was unschwer der stabilen Reflexionsfarbe zu entnehmen ist, welche die cholesterische Phasen bildenden Polymere und Oligomere der Erfindung bilden. Man kann vermuten - ohne jedoch die Erfindung hierdurch an eine Theorie zu binden - daß diese hohe Stabilität durch die bestimmten Komponenten A) (chirale Comonomere) verursacht wird, die mindestens einen von einem monosubstituieren p-Phenylenrest verschiedenen Cyclus enthalten.

- Die Helixganghöhe der cholesterischen Phase bestimmt deren Reflexionsfarbe.
  Die selektive Reflexionswellenlänge ist im Rahmen der Erfindung durch Wahl eines geeigneten Comonomeren A) einstellbar und kann Werte in einem weiten Bereich von UV bis IR annehmen. Von technischem Interesse sind Werte von 200 nm - 20,0 µm, bevorzugt für Pigmente und Einfärbungen von LCP ist der Bereich 300 nm - 1000 nm. Ganz besonders bevorzugt bevorzugt für Pigmente und Einfärbungen von LCP ist jedoch der sichtbare Bereich zwischen 400 und 800 nm mit den Farben (kupfer)rot, (gold)gelb, grün, blau und violett, wobei durch Änderung des Betrachtungswinkels praktisch alle Farben sichtbar werden. Für Werkstoffe aus den erfindungsgemäßen Polymeren, bei denen die Reflexionsfarbe für die Einfärbung nicht von Bedeutung ist, kann die Helixganghöhe durch Wahl von sehr wenig chiralem Comonomer (in der Nähe des minimalen Einbaugehalts von > 0,01 %) auch größer als 20 µm eingestellt werden, wobei jedoch der Grenzwert "unendlich" ausdrücklich nicht eingenommen wird, weil dies der bekannten nematischen Phase entspräche.

- Brauchbare Schichten und Pigmente sind erhältlich, ohne daß wie bei den bekannten Siloxanpolymeren vernetzt werden muß.
  Dieser Schritt ist bei den erfindungsgemäßen Polymeren nicht nötig, kann aber bei besonderem Bedarf auf die dem Fachmann bekannte Art und Weise noch zusätzlich durchgeführt werden, wenn es einen besonderen -zur Zeit nicht erkennbaren Bedarf- dafür gibt.

- Bei geeigneter Wahl der Parameter, z.B. $0,1 < h < 2$ [dl/g], erhält man ein Material, das aufgrund seiner Sprödigkeit, hervorragend mahlbar ist, und ausweislich rasterelektronenmikroskopischer Untersuchungen zum erwünschten schiefrigen Bruch neigt, was insbesondere für die Herstellung von Flittern und Pigmenten für Effektlackierungen geeignet ist. Dennoch ist hier, wie auch natürlich bei den Werkstoffen mit $h > 2$ [dl/g], die mechanische Stabilität (Pumpenstabilität) ausreichend gut, um die allermeisten technischen Ansprüche zu erfüllen.

- Hohe chemische Inertheit.
  Aufgrund ihrer weitgehenden Inertheit gegen chem. Agenzien und Lösemitteln im Speziellen, sind die erf.gem. Polymeren mit vielen anderen Hilfsstoffen verträglich und können gemischt werden.

- Vielfältige Anwendbarkeit farbiger Werkstoffe.
  Werkstoffe, die aufgrund ihrer Reflexion farbig erscheinen, können in vielen Bereichen eingesetzt werden. Dies reicht von technische notwendigen Markierungen von einzelnen (Geräte-) Teilen , bis hin zum ästhetisch anspruchsvollen Design von Alltagsgeräten.

- Markierungen im nicht-sichtbaren Bereich.
  Markierungen im nicht sichtbaren Bereich können besonders sinnvoll zum automatischen Erkennen von Objekten eingesetzt werden, z.B. mit einem Nah-IR LED-Laser, der für das menschliche Auge nicht sichtbar ist. Dies läßt sich am anschaulichsten vergleichen mit einem Barcode-Leser an der Supermarktkasse.

- Thermoplastische Verarbeitbarkeit unterhalb der Zersetzungstemperatur

Das im Anspruch 1 wiedergegebene Prinzip ist sehr vielfältig anwendbar und eröffnet ein zwar breites aber dennoch begrenztes Feld, wie erfindungsgemäße Polymere erhalten werden können. Durch die Wahl von mindestens drei Bausteinen, die im allgemeinen Fall unterschiedlich zur Länge des Moleküls beitragen, wird das kristalline "Einrasten" benachbarter Molekülketten durch infinitesimal kurze Parallelverschiebungen effektiv verhindert. Diese Modellvorstellung wird im Englischen als "longitudinal register" bezeichnet und kann als Vorstufe zu einer (lateralen) Kristallisation betrachtet werden.(A. Skoulios, Makromol. Chem. Phys. 196, 2081,2092 (1995)). Demzufolge werden durch mindestens drei Bausteine im Polymeren solche prä-kristallinen Zustände energetisch nicht begünstigt, was sich in einer Absenkung der meisten Phasenübergangstemperaturen äußert. Eine der wichtigsten praktischen Auswirkungen ist, daß sich die Materialien deutlich unter ihrer Zersetzungstemperatur thermoplastisch verarbeiten lassen.

- Durch die unerwartet hohe Verdrillungskraft der in den erfindungsgemäßen Polymeren enthaltenen chiralen Komponente ist es nachgerade wünschenswert, mindestens eine dritte Komponente im Polymeren zu haben, weil sonst leicht abzuschätzen ist, daß Pitch und Reflexion kürzer als 200 nm würden, was aufgrund der UV-Eigenabsorption des Materials nur von virtueller Bedeutung wäre. Wenn die Komponente C) auch chiral ist, dann hat diese dritte Komponente bevorzugt einen zur ersten Komponente A) entgegengesetzten Verdrillungsdrehsinn (partiell kompensierte cholesterische Phase).

- Relativ "einfache" Polymere zeigen bereits die erfindungsgemäßen Vorteile

  Selbst eines der denkbar einfachsten und billigsten von der Erfindung umfaßten Polymere, nämlich PET, in dem ein Teil des aus dem Monomeren Glykol resultierenden Molekülbaustein durch z. B. Isosorbit ersetzt wurde, stellt die vorteilhaften Eigenschaften der Erfindung in Aussicht. Bereits ein an ein Terephthalsäureelement geknüpftes Isosorbitsegment ist anscheinend ausreichend mesogen.

- Ästhetisch anspruchsvoller Oberflächenschutz.

Die erfindungsgemäßen Polymere können einen schützenden Überzug im Sinne eines organischen Email bilden, der gut auf Metalloberflächen haftet.

Bei den Polymeren der Erfindung handelt es sich im weitesten Sinne um Copolymere. Erfindungsgemäße Polymere, die cholesterische Phasen bilden, weisen mindestens einen bifunktionellen chiralen Molekülbaustein A) auf, der wenigstens ein von einer monosubstituierten p-Phenylengruppe verschiedenes cyclisches Strukturelement aufweist.

Der Terminus "Molekülbaustein" wird im Rahmen der Erfindung im Sinne von "constitutional unit" gebraucht. D. h. eine in der Polymerkette enthaltene Struktureinheit, die auf ein bestimmtes Monomer oder Comonomer zurückgeht. Unter Strukturelement wiederum wird ein am Aufbau des jeweiligen Monomeren oder Comonomeren beteiligter Rest verstanden. Das Monomer oder Comonomer kann dabei aus mehreren Strukturelementen zusammengesetzt sein. Das oder die Strukturelemente, die das Monomer oder Comonomer bilden, können wiederum als Struktureinheit bei der das Polymer generierenden Reaktion Eingang in das fertige Polymer finden. Insbesondere können Monomer oder Comonomer auch Strukturelemente aufweisen, die im Verlauf der polymererzeugenden Reaktion nicht oder nur teilweise Eingang in das Polymer finden, beispielsweise im Verlauf einer Polykondensationsreaktion abgespalten werden.

Dies soll am Beispiel eines erfindungsgemäßen Polymeren aus den drei Monomeren Isosorbit (für den chiralen Molekülbaustein A), Terephthalsäuredichlorid und Ethylenglykol (Komponenten für die Molekülbausteine B) und C)) erläutert werden.

Aus den genannten Komponenten lassen sich auf geeignete Weise z.B. durch Polykondensation Polymere erzeugen, die folgende, nach den bekannten Regeln der Chemie auf bestimmte Weise verknüpfte Molekülbausteine oder "structural units" enthalten:

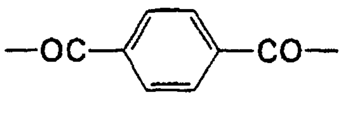

$-O-CH_2-CH_2-O-$

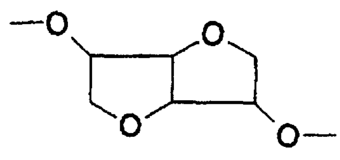

Die Struktureinheiten respektive Molekülbausteine umfaßen im verknüpften Zustand (also bezogen auf das Polymer) die nachfolgenden Strukturelemente, die mit Blick auf das Polymer folgendermaßen definiert sind:

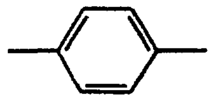

$-CH_2-CH_2-$

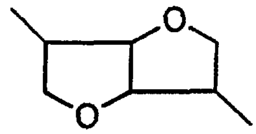

.

Die oben gezeigten Struktureinheiten umfaßen ebenso die die drei gezeigten Strukturelemente verbindenden Brückenelemente, die im Beispielfall folgendes Aussehen haben:

-OOC-

Wenn von Strukturelement im Zusammenhang mit Monomeren die Rede ist, soll dies einen Rest des Monomeren bedeuten. Im gewählten Beispielfall hätten die genannten Monomere folgende Strukturelemente:

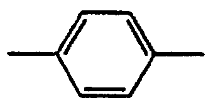

$-CH_2-CH_2-$

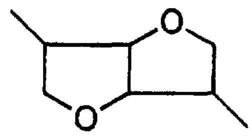

sowie ClOC- und HO-.

Von diesen finden die ersten ebenfalls als Strukturelemente des Polymeren Eingang in dieses, während ClOC- und HO- als Brückenelement unter Abspaltung von HCl in das Polymer eingebaut werden.

Zu beachten ist des weiteren noch bei Strukturelementen, die im Polymer eingebaut sind, daß diese sich aus verschiedenen "Unterstrukturen" zusammensetzen können, wobei in der Erfindung jedoch jede dieser Unterstrukturen als Strukturelement bezeichnet wird. So wird bei Verwendung von $Cl-OC-CH_2-O-F-O\ -CH_2-CO-Cl$ anstelle von ClOC-F-COCl als Monomer ein Polymer erzeugt, das u.a. folgende Struktureinheit aufweist:

$-(CH_2)-O-F-O-(CH_2)-$. Diese Struktureinheit ist aus den Strukturelementen $-O-(CH_2)-$ und -F- zusammengesetzt.

Im Hinblick auf die "Brückenelemente" des Polymeren ist folgendes festzuhalten:

Durch die zu erfindungsgemäßen Polymeren führenden Polyreaktionen können die unterschiedlichsten Verknüpfungsgruppen entstehen, die alle gemeinsam haben, daß sie sich auf die eine oder andere Weise von der Carbonylgruppe C = O ableiten.

Zu möglichen Brückenelementen gehören u. a. Estergruppierungen mit (C = O)O und O-C = O, Kohlensäureester mit O-(C = O)-O, Amidgruppen CONH, N-substituiertes Amid CONR, cyclisches Imid mit fünf bzw. sechs Ringgliedern, Azomethine CH = N und CR = N, wobei der Rest R in den vorgenannten Brückenelementen gleich oder verschieden $C_1-C_{22}$-Alkyl, -Aryl, -Aralkyl sein kann, wobei im Falle eines nicht cyclischen Restes oder im Falle des Vorliegens einer Kombination mit einem nicht cyclischen Restes der nicht cyclische Anteil linear oder verzweigt sein kann,und wobei sowohl lineare, verzweigte und/oder cyclische Reste ggfs. mindestens ein von C und H verschiedenes Heteroatom enthalten können und/oder ggfs. substituiert - auch heteroatomsubstituiert - sein können, wobei der Substituent insbesondere auch ein oder mehrere Halogen(e) tragen kann.

Bevorzugt sind die obengenannten Brückenelemente mit der Ausnahme cyclisches Imid mit fünf Ringgliedern, besonders bevorzugt mit den Ausnahmen cyclische Imide mit fünf oder sechs Ringgliedern.

Hierdurch wird jedoch nicht ausgeschlossen, daß die erfindungsgemäßen Polymeren auch auf anderen - dem Fachmann bekannten - Wegen erhalten werden können; beispielsweise durch Einsatz von Monomeren, die bereits Verknüpfungselemente oder Brückenelemente enthalten, die sich für gewöhnlich erst in der Polyreaktion bilden. So gehört z. B. auch ein unter Mitwirkung von Bis(2-hydroxyethyl)terephthalat als Monomer gebildetes Polymer zur Erfindung, obwohl es bereits zwei Estergruppen vorgebildet enthält, und somit im Sinne der Erfindung gleich zwei Molekülbausteine oder Monomerbausteine, nämlich den Glykolrest und den Terephthaloylrest miteinbringt. Analoges gilt für die Herstellung der Polymeren aus mindestens einem Oligomeren und auch für die Herstellung der erfindungsgemäßen Polymeren aus einem bereits vorgebildeten Polymeren durch Äquilibrieren mit einer oder mehreren Komponenten ausgewählt aus: Polymeren, Oligomeren und Monomeren.

Die erfindungsgemäße Komponente A (Molekülbaustein A) umfaßt generell alle chiralen Komponenten, die

wenigstens ein von einer monosubstituierten p-Phenylengruppe verschiedenes cyclisches Strukturelement aufweisen. Unter p-Phenylengruppe wird hierbei das folgende nur einen von H verschiedenen Substituenten (X ist ungleich H) tragende Strukturelement verstanden

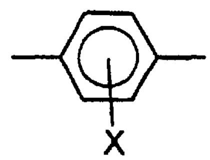

Biphenylylene, Naphthalinylene, weitere mehrfach kondensierte aromatische Reste, etc. fallen im Umfang der Erfindung nicht unter den Oberbegriff Phenylene, gehören demnach gleich ob ein- zwei oder mehrfach substituiert auch als Strukturelement des Molekülbausteins A) zur Erfindung.

Selbstverständlich muß zur Erzeugung einer cholesterischen Phase mindestens eines der die Komponente A ausmachenden cyclischen Strukturelemente optisch aktiv sein.

Zweckmäßig rekrutieren sich die Molekülbausteine A aus dem "chiral pool". Hierunter wird in der Fachwelt (Ullmanns Encycl. Chem. Techn., 5. Auflage,Bd A18, S. 183, 1991, VCH-Verlag) die Gesamtheit der natürlich vorkommenden chiraien Verbindungen verstanden. Insbesondere gehören hierzu sowohl die chiralen Bausteine tierischen als auch pflanzlichen Ursprungs. Dies schließt jedoch die Verwendung vollsynthetischer oder teilsynthetischer chiraler Molekülbausteine keinesfalls aus. So können auch aus Naturstoffen durch einen oder mehrere Syntheseschritte wertvolle chirale Komponenten erhalten werden, die so entweder nicht oder nur in geringeren Mengen in der Natur vorkommen.

Besonders geeignete Gruppen leiten sich beispielsweise von Kohlenhydraten ab. So sind geeignete Ausgangsprodukte Zucker, daraus erhältliche Zuckeralkohole und Derivate, insbesondere auch Anhydrozuckeralkohole.

Eine weitere wichtige Gruppe sind Aminosäuren und die sich daraus ableitenden Aminoalkohole. Beispielhaft hierfür ist die einen Cyclus enhaltende Aminosäure Prolin, besonders bevorzugt in der natürlichen Form L-Prolin.

Die chiralen Monomerbausteine können üblicherweise in einer zur Durchführung der Polyreaktion geeigneten Form käuflich erworben werden und sind somit verfügbar. Falls durch nicht enantioselektive Syntheseschritte racemische Gemische anfallen, lassen sich diese in die Enantiomeren aufspalten, wobei die dem Fachmann bekannten Verfahren und deren Varianten angewendet werden können, wie z.B. die fraktionierte Kristallisation diastereomerer Salze oder die Chromatographie an chiralen stationären Phasen, wobei vor allem (modifizierte) Cellulose als Adsorbens zu nennen ist.

Zu bevorzugten chiralen Strukturelementen, die als Teil entsprechender Molekülbausteine in die erfindungsgemäßen Polymeren eingebaut werden können, gehören unter anderem:

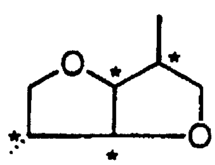
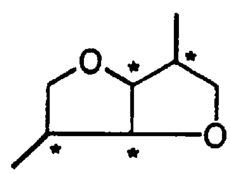
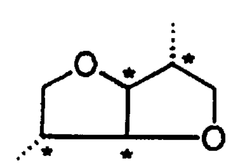

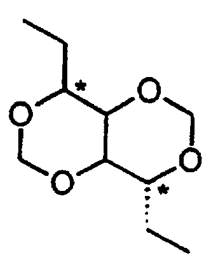
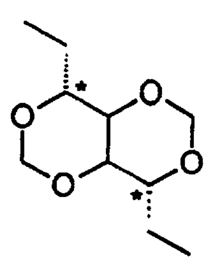
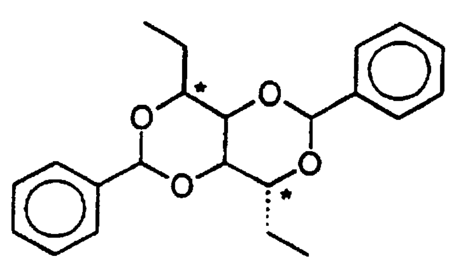

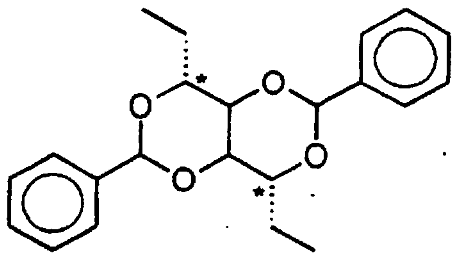

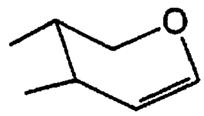

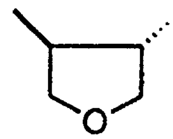

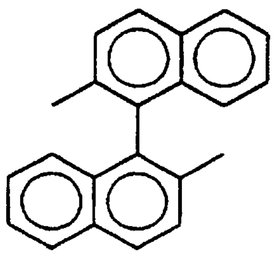

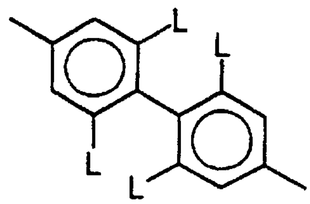
,

wobei L $C_1$-$C_4$-Alkyl, $CF_3$, $C_1$-$C_4$-Alkoxy, Halogen, COOR, OCOR, CONHR oder NHCOR ist und R die Bedeutung $C_1$-$C_4$-Alkyl oder Wasserstoff hat.

Bevorzugte chirale Strukturelemente sind auch optisch aktive cyclische Derivate des Glykols, welche der nachfolgenden Formel entsprechen:

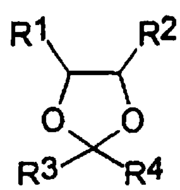
,

worin $R^1$ - $R^4$ unabhängig voneinander gleich oder verschieden Wasserstoff, $C_1$-$C_4$-Alkyl, das noch durch Hydroxy substituiert und durch -O- unterbrochen sein kann, Phenyl oder gegebenenfalls substituiertes Carboxyl sein können, wobei bei gleichen Resten $R^1$ und $R^2$ die Konfiguration *RS* ausgeschlossen ist.

Besondere Reste $R^1$ und $R^2$ sind unter anderem $CO_2CH_3$, $CO_2CH_2CH_3$, $CO_2(CH_2)_2CH_3$, $CO_2(CH_2)_3CH_3$, $CO_2CH(CH_3)_2$, $CO_2C(CH_3)_3$ oder $-CH(OH)CH_2(OH)$.

Weitere bevorzugte Strukturen sind die nicht-meso Formen der Tetrahydrofuran-2,3,4,5-tetracarbonsäure, deren Anhydride sowie die daraus durch Decarboxylierung erhältlichen Tricarbonsäuren: Tetrahydrofuran-2,3,4-tricarbonsäure, Tetrahydrofuran-2,3,5-tricarbonsäure und Dicarbonsäuren: Tetrahydrofuran-2,5-dicarbonsäure Tetrahydrofuran-2,3-dicarbonsäure, Tetrahydrofuran-3,4-dicarbonsäure.

Weiterhin sind auch spezielle bifunktionelle chirale Molekülbausteine geeignet, die folgende Strukturen aufweisen:

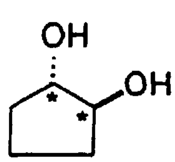

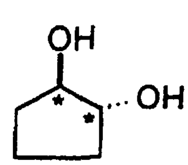

Besonders bevorzugt unter den vorgenannten Verbindungen sind

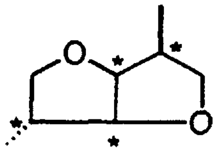
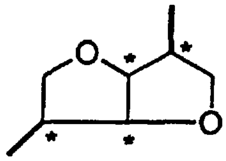
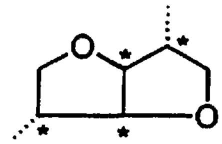

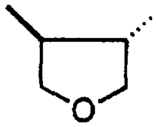
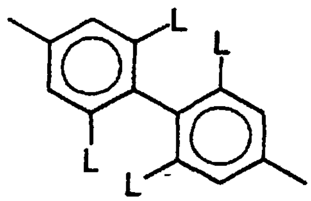

Besonders bevorzugt sind auch Derivate des
Isosorbits (1,4:3,6-Dianhydro-D-sorbit),
Isomannits (1,4:3,6-Dianhydro-D-mannit) und
Isoidits (1,4:3,6-Dianhydro-D-idit, 1,4:3,6-Dianhydro-L-idit), nämlich die Mono- und Diacetate, $-O-CH_2-COOH$, $-NH_2$, $-O-CH_2-CH_2-OH$, -O-F-COOH, usw.

Weiterhin von vornehmlich großem Interesse sind auch diejenigen chiralen Strukturelemente, die sich von den nachfolgenden Verbindungen ableiten oder in diesen enthalten sind:

D und L-Prolin, insbesondere L-Prolin und der korrespondierende Aminoalkohol Prolinol ( = 2-(Hydroxymethyl) pyrrolidin), besonders bevorzugt ebenfalls in der L-Form;

Strukturelemente wie

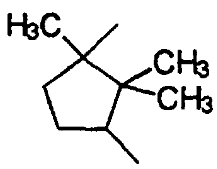
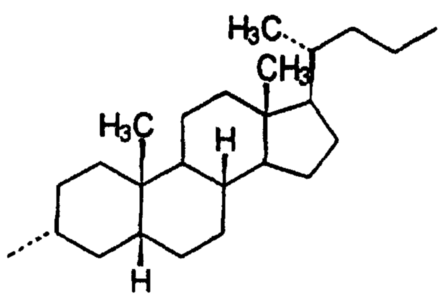

die sich von Camphersäure und Lithocholsäure ableiten lassen, Molekülbaustein A besteht vorzugsweise nicht aus von Camphersäure abgeleiteten Strukturelementen, besonders bevorzugt enthält er sie nicht.

Derivate der Harzsäuren, insbesondere der Abietin- und Dehydroabietinsäure, wobei besonders zweckmäßig die aus Dehydroabietinsäure durch Autoxidation und Hock-Umlagerung zugängliche phenolische Carbonsäure ist, die sich als AB-Monomer analog zu 4-Hydroxybenzoesäure verhält.
Zur Erläuterung werden beispielhaft folgende Strukturformeln angegeben:

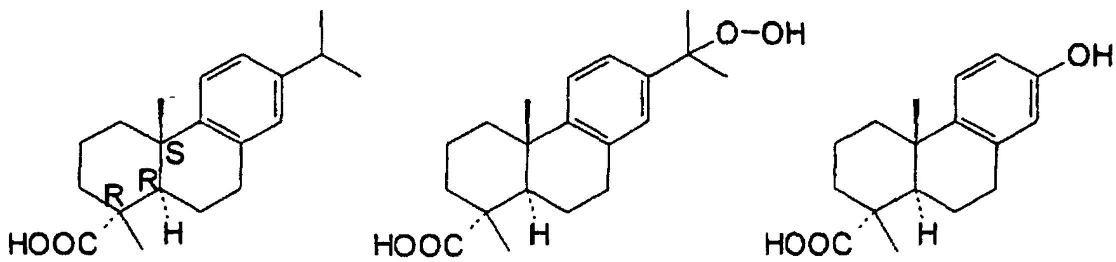

, wobei die phenolische Carbonsäure (Struktur rechts) den systematischen Namen 1,2,3,4,4a,9,10,10a-octahydro-7-hydroxy-1,4a-dimethylphenanthrencarbonsäure hat. Dies Verbindung stellt folgendes Strukturelement im cholesterische Phasen bildenden Polymeren oder Oligomeren der Erfindung zur Verfügung:

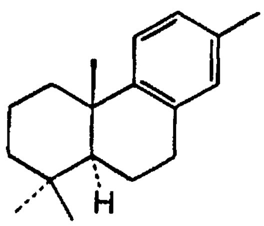

Strukturelemente mit einem 1,4-verknüpften Cyclohexanring, die sich aus Monomeren ergeben wie:

monosubstituierten 1,4-Cyclohexandicarbonsäuren, besonders günstig R- oder S-2-Methylcyclohexan-1,4-dicarbonsäure,
oder
monosubstituierten Cyclohexan-1,4-diolen, etwa äußerst vorteilig wie R- oder S-2-Methylcyclohexan-1,4-diole;

Bisphenol-Strukturelemente, wie

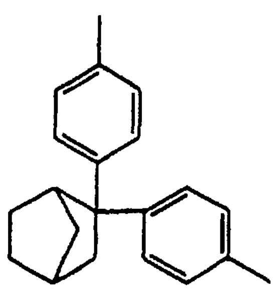

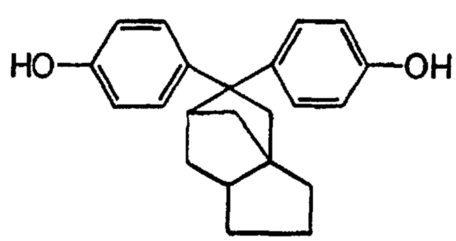

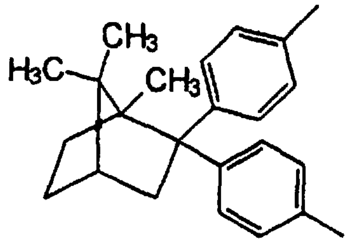

,

die aus Bisphenolen resultieren, welche sich von mono-, bi- oder multicyclischen Ketonen oder aus Terpenketonen, wie Campher, ableiten; Strukturelemente, die z. B. aus Bisphenolen herleitbar sind, die sich vom Isophoron ableiten:

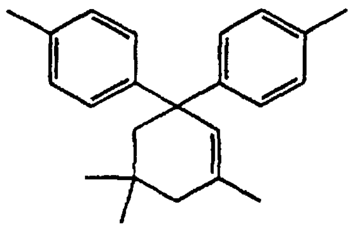

;

Derivate der Troeger schen Basen:

(5S,11S)-(-)-2,8-Dimethyl-6H,12H-5,11-methano-dibenzo[b,f][1,5]diazocin oder (5R,11R)-(+)-2,8-Dimethyl-6H, 12H-5,11-methano-dibenzo[b,f][1,5]diazocin, jeweils als 2,8-Dicarbonsäure oder jeweils als 3,9-Diaminoderivat, das durch Nitrierung und Reduktion zugänglich ist;
chirale Strukturelemte, die sich von folgenden Verbindungen ableiten: R- oder S- 1-(4-Carboxyphenyl)-1,3,3-trimethyl-indan-5-carbonsäure, 1,2-Bis(4-hydroxyphenyl)propan, Propylen-1,2-bis(4-benzoesäure), 4-(3-Hydroxyphenylsulfoxy)benzoesäure, Spirobicyclohexan-4,4'-dicarbonsäure (beschrieben in Boehm et al., Tetrahedron, Asym.5, 1281 (1994));
Strukturelemente, die sich aus Spiro[9H]bifluoren-Derivaten ergeben, bevorzugt 2-Acetyloxy-spiro[9H]bifluoren-2'-dicarbonsäure und 2-Acetaminospiro[9H]bifluoren-2 '-dicarbonsäure.

Das cyclische Strukturelement des Molekülbausteins A enthält vorzugsweise zwei oder mehr Ringsysteme, besonders bevorzugt ist es bi- oder polycyclisch.
Die genannten chiralen Molekülbausteine A sind entweder allein oder in Mischung von zwei oder mehreren am Aufbau des erfindungsgemäßen cholesterische Phasen bildenden Polymeren oder Oligomeren beteiligt.
Im Rahmen der Erfindung weisen die cholesterische Phasen bildenden Polymere und Oligomere als Molekülbausteine neben der essentiellen Komponente A als Komponenten B und C mindestens einen bifunktionellen achiralen oder racemischen Molekülbaustein B auf, der wenigstens ein cyclisches Strukturelement aufweist, welches mindestens vier Ringglieder enthält, sowie mindestens einen bifunktionellen Molekülbaustein C, der beliebig chiral oder achiral, cyclisch oder acyclisch sein kann und von den tatsächlich eingesetzten Molekülbausteinen A und B verschieden ist.
Die bifunktionellen Molekülbausteine B weisen ein cyclisches Strukturelement auf, welches mindestens vier Ringglieder enthält. In jedem Fall sind die Molekülbausteine B achiral oder racemisch, jedoch nicht optisch aktiv.
Als bifunktionelle achirale oder racemische Molekülbausteine kommen erfindungsgemäß aus einer Gruppe, die den typischen gestreckten Molekülaufbau sogenannter Hauptketten-LCP ergibt, um die es sich bei den erfindungsgemäßen Polymeren handelt.
Hierunter fällt das Gros, der dem Fachmann geläufigen Monomere, die gemeinsam haben, daß durch sie die Polymerkette einen gestreckt linearen Charakter erhält, weil die Verknüpfungsstellen praktisch kollinear, also genau oder ausreichend ähnlich 180 Winkelgraden angeordnet sind.
Beispiele sind das p-Phenylen in Terephthalsäure, Hydrochinon, 4,4'-Biphenol, 4,4'-Bibenzoesäure, p-Aminophenol, 2,5-Pyridindicarbonsäure, trans-1,4-Cyclohexandicarbonsäure, was der Nichtfachmann unschwer der Vielzahl an einschlägigen Monographien und Übersichtsartikeln entnehmen kann (z.B. Encycl. Polym. Sci. Eng. Vol.9, S. 1-61, Rev. Ed., Wiley, 1987).

Ein geringerer Anteil von Monomeren (kleiner 50%, bevorzugt kleiner 40%), welcne die Strukturelemente der Molekülbausteine B zur Verfügung stellen, darf von der geforderten Linearität mehr oder weniger stark abweichen. Dem Fachmann ist bekannt, daß diese nicht-linearen Molekülteile in der ansonsten linearen Polymerkette durch Knicke (sog. "Kinks") Versetzungen und Kurbelwellen-Bewegungen bewirken, die der Verarbeitbarkeit der Materialien zugute kommen. Auch laterale Substituenten sind vorteilhaft für die Verarbeitbarkeit.

Diese für LCP bekannten und teilweise bereits üblichen Monomeren sind bevorzugte Strukturelemente. Besonders bevorzugt sind solche, die bereits für kommerzielle oder am Markt zu Testzwecken befindliche LCP eingesetzt wurden und werden.

Repräsentative Monomere gemäß Anspruch 1, die diese Forderungen erfüllen, können bevorzugt aus folgenden Gruppen ausgewählt werden, wobei ausdrücklich auch einfache Derivate, die gfs. zur Aktivierung für die Polykondensation hilfreich sind, mit umfaßt werden.

1. Dicarbonsäuren, die sich von einem ggfs. substituierten aromatischen, heteroaromatischen, cycloaliphatischen, bicycloaliphatischen oder multicycloaliphatischen, linear oder verzweigt aliphatischen Kohlenwasserstoff ableiten, der auch mindestens ein Heteroatom pro Ringelement enthalten kann. Der Grundkohlenwasserstoff kann auch mehrere gleiche oder verschiedene der oben genannten Strukturelemente enthalten, wobei diese über gleiche oder verschiedene Brückenglieder verknüpft sein können. Eine Auswahl von Brückengliedern sind: chemische Bindung, -C=C-, C,C-Dreifachbindung, -S-, -O-, -SO-, $-SO_2-$, usw. Dadurch ergibt sich, daß die beiden Carbonsäure-Gruppen entweder gleichartig oder unterschiedlich gebunden sein können. Die beiden Carbonsäure-Gruppen dürfen jedocn nicht in der Lage sein, ein stabiles, cyclisches Anhydrid zu bilden. In diesem Falle wären es Endgruppenbildner in solchen Rezepturen, die Monomere mit Aminogruppen besitzen (siehe hierin unter f-j.l), wobei sich cyclische Imid-Gruppen ausbilden können.

2. Tricarbonsäuren, die sich von den unter a) beschriebenen Dicarbonsäuren ableiten lassen, wobei die dritte Carbonsäure-Gruppe so eingeführt wird, daß sich mit einer Amino-Gruppe eines anderen Monomeren (z.B f-j,l) eine 5- oder vorzugsweise 6-Ring-Imid-Gruppe bilden kann. Andere isomere Tricarbonsäuren können gewählt werden, um Verzweigungen der an sich linearen Molekülketten zu erzeugen, wobei deren Gehalt jedoch bevorzugt so niedrig gewählt werden sollte, daß eine unerwünschte Vernetzung des Materials nicht merklich in Erscheinung tritt.

3. Tetracarbonsäuren, mit der Maßgabe, daß jeweils zwei der Säuregruppen in der Lage sind, einen 5- oder vorzugsweise 6-Ringglieder enthaltende Imidbaustein mit einem gleichzeitig vorhanden Monomeren zu bilden, welches mindestens eine Aminofunktionalität trägt.

4. Hydroxycarbonsäuren, die sich von den unter a) angegebenen Strukturen durch Ersatz einer der beiden Carbonsäure-Gruppen durch eine HO-Funktion ableiten, wobei diese sowohl phenolisch, d.h. an einen (hetero)aromatischen Ring gebunden, als auch alkoholisch, d.h. an einen aliphatischen Rest gebunden sein können. Dieser aliphatische Rest kann cyclisch und/oder linear sein. Eine weiteres Unterscheidungsmerkmal ist, ob es sich um eine primäre oder sekundäre HO-Funktion handelt. Das funktionelle Strukturelement Hydroxymethylcyclohexyl ist hier besonders hervorzuheben. Untauglich sind Strukturen, die zu cyclischen Lactonen, d.h. sowohl intramolekular oder intermolekular-bimolekular, führen. Hydroxycarbonsäuren sind zum Aufbau der Strukturelemente B und/oder C bevorzugt.

5. Diole, die sich ähnlich wie d) von a) auch von a) durch Ersatz beider Carbonsäure-Funktionen durch HO-Funktionen ableiten. Hierbei bestehen praktisch keine Einschränkungen bezüglich des Substitutionsmusters, weil mit Nebenreaktionen durch Ringbildung nicht gerechnet werden muß. Hervorzuhebende Vertreter sind Ethylenglykol und 4,4'-Biphenol.

6. Aminophenole und insbesondere N-Acyl- bzw. N-Acyl-N-alkylderivate. Hier können alle Substitutionsmuster wie unter d) beschrieben vorteilhaft eingesetzt werden. Ortho-Stellung muß hier jedoch nicht wegen der eher unwahrscheinlichen Bildung von Lactamen vermieden werden, sondern wegen der Bildung von Oxazolderivaten zusammen mit Carbonsäuren, die als Nebenreaktion zu Endgruppen führen kann.

7. Aminoalkohole, hier sind die Substitutionen zu vermeiden, die bekanntlich zu Heterocyclen-Bildung neigen. Dazu gehört insbeondere 2-Aminoethanol, das mit Carbonsäure-Gruppen leicht Oxazolin bildet.

8. Aminocarbonsäuren sind grundsätzlich alle möglich, hier sind nur alle die Strukturelemente zu meiden, die zur intra- oder intermolekularen, bimolekularen Lactambildung neigen.

9. Aminodicarbonsäuren, können nach den unter h) genannten Kriterien ausgewählt werden. Bevorzugt sind Substitutionsmuster, die den beiden Carbonsäurefunktionen erlauben, einen fünf- oder vorzugsweise sechsgliedigen Imidring als Verknüpfungselement aufzubauen.

10. Diamine, N-Acylderivate und Diisocyanate, unterliegen im Falle eines aromatischem Grundgerüsts Einschränkungen im Substitutionsmuster bezüglich der ortho-Substitution, die bekanntlich mit Carbonsäuren zur Bildung von Benzimidazol führt.

11. Dialdehyde gehören zu den weniger bevorzugten Monomeren aufgrund ihrer Instabilität allgemein und Oxidationsneigung im speziellen, darüberhinaus sind sie nicht sehr leicht zugänglich, dennoch kommen Glyoxal und Terephthaldialdehyd für technische Zwecke in Frage.

12. Aminoaldehyde, aus den gleichen Gründen wie unter k) aufgeführt gehört diese Klasse nicht zu den besonders bevorzugten, obwohl einzelne Vertreter, die leicht verfügbar sind, dennoch von besonderem Interesse sind, insbesondere 4-Aminobenzaldehyd.

13. Hydroxyaldehyde; hier gilt das unter l) Gesagte, wobei der technisch interessanteste Vertreter 4-Hydroxybenzaldehyd ist.

14. Monomere, die eine beliebige Kombination von zwei oder drei der oben angegebenen funktionellen Gruppen tragen, mit der Maßgabe, daß Substitutionsmuster vermieden werden, die wie oben angegeben zu Nebenreaktionen Anlaß geben.

Beispiele für einfache aktivierende Substanzen umfassen unter anderem:

Derivate der Essigsäure und ihrer Homologen wie Propionsäure und Buttersäure, wobei letztere bereits aufgrund des Geruchs weniger bevorzugt ist;
Acetanhydrid, Keten, Acetylchlorid, gemischtes Anhydrid mit Ameisensäure oder Kohlensäure, Trimethylchlorsilan, Triphenylphosphit, Polyphosphorsäure;
Carbodiimide, wie Dicyclohexylcarbodiimid, Diphenylcarbonat, Dimethylcarbonat und alle weiteren dem Fachmann geläufige aktivierend wirkende Substanzen.

Neben Lewis-Säuren, wie org. Zinn-Verbindungen, können auch andere Katalysatoren zugesetzt werden. Als Katalysatoren haben sich generell bewährt Alkali- und Erdalkalisalze von Fettsäuren, insbesondere Alkalisalze der niederen Fettsäuren. Als ganz besonders geeignet hat sich Kaliumacetat erwiesen, das auch in der Polykondensation zu Beschleunigung zugesetzt werden kann. Für die Aktivierung sind auch die sog. Steglich-Basen hilfreich, z.B. 4-(N, N-Dimethylamino)pyridin und N-Pyrrolidinopyridin. Doch die Aktivierung gelingt im allgemeinen auch ohne besondere Zusätze.

Zu den erfindungsgemäß besonders interessanten Monomeren aus den Gruppen a) bis n), die nach Einbau in die erfindungsgemäßen Polymere in Abhängigkeit von der Polyreaktion in entsprechenden Molekülbausteinen B mit den abgeleiteten Strukturelementen resultieren, gehören unter anderem die folgenden, wobei die jeweilige reaktive Gruppe aufgeführt oder nicht mitaufgeführt wird oder nach Kenntnissen des Fachmanns variiert werden kann:

Terephthalsäure, Trifluormethyl-terephthalsäure, Fluorterephthalsäure, Chlorterephthalsäure, Bromterephthalsäure, Methoxyterephthalsäure, Phenylterephthalsäure, Phenoxyterephthalsäure, Phenylthioterephthalsäure;

Isophthalsäure, 5-Sulfo-isophthalsäure;

Kohlensäure, bevorzugt als Ester, besonders bevorzugt als Dimethylcarbonat und Diphenylcarbonat;

4,4'-Azobenzoldicarbonsäure, 4,4'-Azoxybenzoldicarbonsäure;

Schiffsche Basen, wie C,N-Bis(4-Carboxyphenyl)azomethin;

Stilben-4,4'-dicarbonsäure, a-Methylstilben-4,4'-dicarbonsäure, Tolan-4,4'-dicarbonsäure, 2,5-Furan-dicarbonsäure, 2,5-Thiophen-dicarbonsäure, Thiadiazol-dicarbonsäuren, insbesondere 1,3,4-Thiadiazol-2,5-dicarbonsäure;

Pyridin-2,5-dicarbonsäure, Pyrimidin-2,5-dicarbonsäure;

2,6-Naphthalin-dicarbonsäure, 1,4-Naphthalin-dicarbonsäure;

3,3'-Biphenyl-dicarbonsäure, 4,4'-Biphenyl-dicarbonsäure, 2,2'-Biphenyl-dicarbonsäure, 2,4'-Biphenyl-dicarbonsäure;

Fluoren-dicarbonsäuren, Fluorenon-dicarbonsäuren, 4,4'-Diphenylether-dicarbonsäure, 3,4'-Diphenylether-dicarbonsäure;

4,4'-Diphenylthioether-dicarbonsäure, 3,4'-Diphenylthioether-dicarbonsäure;

4,4'-Diphenylsulfon-dicarbonsäure, 4,4'-Diphenylsulfoxid-dicarbonsäure;

Tetrahydrofuran-2,3,4,5-tetracarbonsäure als Gemisch der technisch anfallenden Diastereomeren, Perylen-3,4,9,10-tetracarbonsäure, insbesondere als Anhydrid, Naphthalin-1,4,5,8-tetracarbonsäure, insbesondere als Anhydrid;

Cyclohexan-1,4-dicarbonsäure in trans- oder cis-Form, bzw. bevorzugt als technische Mischung beider Formen;

Cyclohexan-1,3-dicarbonsäure in trans- oder cis-Form, bzw. bevorzugt als technische Mischung beider Formen;

Cyclohexan-1,4-dimethanol, Cyclohexan-1,3-dimethanol, Biscyclohexyl-4,4'-dicarbonsäure;

4-(4-Carboxyphenyl)-cyclohexancarbonsäure;

4-(4-Aminomethylcyclohexyl)anilin, 4-Hydroxybenzoesäure, 2-Hydroxynaphthalin-6-carbonsäure, 4-Hydroxyphenyl-benzoesäure, 2-Hydroxynaphthalin-4,5-dicarbonsäure, 2-Aminonaphthalin-4,5-carbonsäure, 4-Aminobenzoesäure, 2-Aminonaphthalin-6-carbonsäure, 4-Aminophenyl-benzoesäure;

Hydrochinon, Chlorhydrochinon, Phenylhydrochinon, Resorcin, Brenzcatechin, 4,4'-Biphenol, 2,2'-Biphenol, 2,4'-Biphenol, Bisphenol A-Z;

Naphthalindiole, wie 2,6-Naphthalindiol, 1,4-Naphthalindiol, 1,5-Naphthalindiole, 1,2-Naphthalindiol, 1,3-Naphthalindiol, 1,6-Naphthalindiol, 2,3-Naphthalindiol, 2,7-Naphthalindiol;

Hydroxynaphthylamin mit den unter "Naphthalindiole" angegebenen Substitutionsmustern;

4-Aminophenol, 4-Acetaminophenol, 3-Aminophenol, p-Phenylendiamin, m-Phenylendiamin;

Ethylenglykol und Bis(2-hydroxyethyl)terephthalat;

Cyclohexan-1,4-dimethanol, Cyclohexan-1,3-dimethanol, 1,4-Bis(hydroxymethyl)benzol, 1,3-Bis(hydroxymethyl) benzol, 4,4 '-Dihydroxy-a-methyl-stilben, trans,trans-4,4'-Bicyclohexandiol, 2,6-Decalindimethanol, Cubandicarbonsäure, Biscubandicarbonsäure;

Bicyclododecandicarbonsäure, Bicyclododecandimethanol;

Dibenzodioxin-2,7-dicarbonsäure, Dibenzodioxin-2,3,6,7-tetracarbonsäure, Thianthren-2,7-dicarbonsäure, Thianthren-2,3,6,7-tetracarbonsäure.

Die in den angeführten Monomeren enthaltenen Struktureinheiten oder Molekülbausteine B, die in das erfindungsgemäße Polymer eingebaut werden, enthalten keine hydrolysierbaren Verknüpfungen. Deswegen gehört auch ein Polymer, beispielsweise hergestellt aus Bis(2-hydroxyethyl)terephthalat als Komponente B, zur Erfindung. Hydrolysierbare Verknüpfungen in diesem Sinne sind solche, die sich während einer typischen Polykondensation am Gleichgewicht beteiligen, z.B. Ester, Amid, Imid oder CH=N, während solche wie Ether und Thioether als nicht hydrolysierbar im Sinne der Erfindung gelten.

Die dritte am Aufbau des erfindungsgemäßen Polymeren beteiligte essentielle Komponente ist mindestens ein bifunktioneller Molekülbaustein C, der beliebig chiral oder achiral, cyclisch oder acyclisch sein kann und von den tatsächlich eingesetzten Molekülbausteinen A und B verschieden ist. Als Komponente C werden die in Anspruch 1 aufgelisteten Verdindungen verwendet; bevorzugt rekrutiert sich Molekülbaustein C aus der Gruppe der Molekülbausteine B. Es muß im Rahmen der Erfindung nur gewährleistet sein, daß die tatsächlich in einem Polymeren vorhandenen Bausteine A, B und C voneinander verschieden sind.

Im Rahmen der Erfindung kann die Menge des oder der Molekülbausteine A, die im fertigen Polymeren enthalten ist, über einen weiten Bereich variieren, ohne daß die mit der Erfindung erzielbaren Vorteile verloren gehen.

In bevorzugter Ausführungsform kennzeichnet sich das erfindungsgemäße cholesterische Phasen bildende Polymere dadurch, daß es den Molekülbaustein A zu 0,01 bis 50 Mol-% enthält, bezogen auf die Summe der Mole der Molekülbausteine A, B und C. Liegt der Anteil von A unterhalb von 0,01 Mol-% bewegt sich die Helixganghöhe in Richtung auf den Grenzwert und geht somit in die bekannte nematische Phase über, so daß das Polymer mit < 0,01 mol-% keine technisch verwertbare cholesterische Phase mehr bilden kann. Ist der Anteil von A größer als 50 Mol-%, werden üblicherweise Materialien erhalten, deren Helixganghöhe < 200 nm ist. In diesem Bereich ist einerseits weder mit Selektivreflexion zu rechnen, weil Eigenabsorption auftreten würde, noch sind hier andererseits besondere mechanische Eigenschaften zu erwarten.

Zweckmäßig ist der Gehalt an Molekülbaustein A im Polymeren etwa zwischen 0,1 und 30 mol %, bezogen auf die Summe aller Bestandteile aus den Molekülbausteingruppen A, B und C.

Besonders bevorzugte Polymere sind

X7G™, das aus folgenden Bausteinen besteht

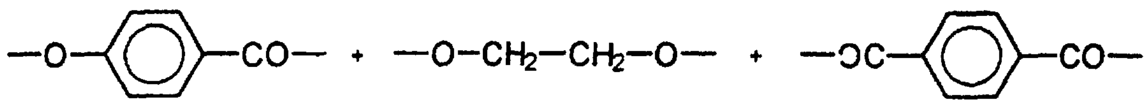

und eine bevorzugte mengenmäßige Zusammensetzung von etwa 60 Mol-% 4-Oxybenzoyl, 20 Mol-% Ethylendioxy und 20 Mol-% Terephthaloyl oder 60 Mol-% 4-Oxybenzoyl und 40 Mol-% Terephthaloyl aufweist;

Xydar™, das aus folgenden Bausteinen besteht

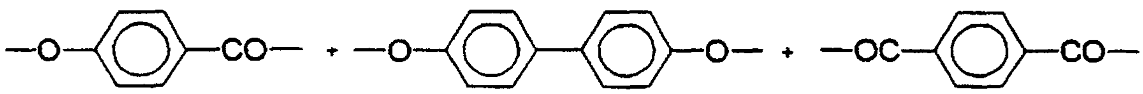

Zenite™, das aus folgenden Bausteinen besteht

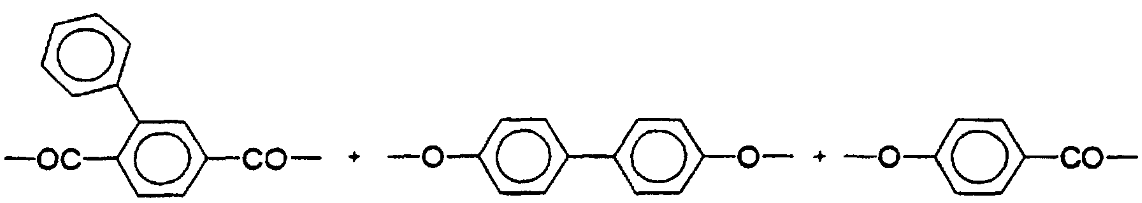

Vectra™, das im wesentlichen aus folgenden Bausteinen besteht

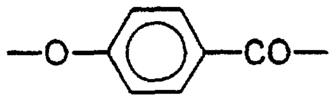

+

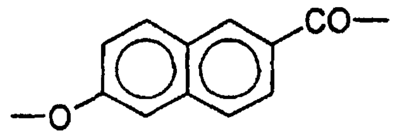

und bevorzugt eine Zusammensetzung von etwa 50 mol %/ 50 mol % der beiden Bausteine aufweist (Vectra™ A), oder eine Zusammensetzung, bei der eine Menge von etwa insgesamt 10 mol % 4-Oxyphenylenimin-Struktureinheiten (entspricht einem Monomer z.B. 4-Acetaminophenol) anstelle eines oder beider der dargestellten Bausteine ins Polymer eingebaut sind (Vectra™ B),
oder eine Zusammensetzung, die dem Vectra™ Typ E enstpricht,
und spezielle Entwicklungstypen, wie COTBPR, aufweisend die folgenden Struktureinheiten

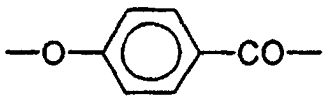

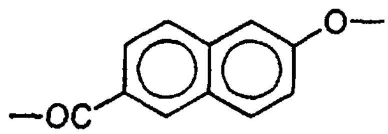

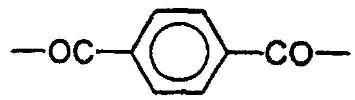

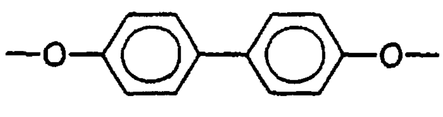

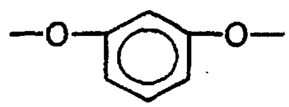

wobei von den jeweiligen Ol-Komponenten zwischen ca. 0,01 und 50 Mol-% durch Isosorbit

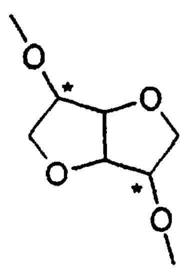

ersetzt sind.

Wenn keine Ol-Komponente in der Rezeptur zugegen ist, muß natürlich eine etwa molar entsprechende Menge eines der beschriebenen Monomeren mit entgegengesetzter Funktionalität der Rezeptur zugesetzt werden, im Falle von Vectra A also z.B. eine der Dicarbonsäuren a), im einfachsten Fall Tere- oder Isophtalsäure oder 2,5-Furandicarbonsäure oder 1,4-Cyclohexandicarbonsäure.

Die erfindungsgemäßen Polymeren zeichnen sich durch eine besonders hohe Beständigkeit auch ohne zusätzliche Vernetzung aus.

Durch geeignete Maßnahmen ist es möglich auch Blockcopolymere aus Segmenten der erfindungsgemäßen Polymeren mit anderen amorphen oder kristallinen Polymeren herzustellen, die insbesondere für mechanisch hochbeanspruchte Artikel und Flitter gut geeignet sind. Beispiele für amorphe Polymere sind PPO, Polysulfone, Polycarbonat oder Polystyrol, während Beispiele für kristalline Polymere PPS, PP und PE sind.

Für bestimmte Anwendungen, wie Beschichtungen oder analytische Zwecke, kann es wünschenswert sein, die erfindungsgemäßen Polymeren in Lösungen zu erhalten. Dies kann mit Lösungsmitteln und deren Gemischen gelingen, die dadurch gekennzeichnet sind; daß mindestens eine der Komponenten gebundenes Halogen enthält. Neben anderen sind hierfür geeignete Lösungsmittel Hexafluorisopropanol, Pentafluorphenol, Chlorphenol mit Methylenchlorid oder 1,1-Dichlorethan, Trifluoressigsäure, Methylenchlorid, Chloroform und/oder Dichloressigsäure.

Besonders bevorzugt sind die Lösungsmittelsysteme:

Hexafluorisopropanol / Pentafluorphenol, Chlorphenol / Methylenchlorid oder 1,1-Dichlorethan, Trifluoressigsäure/ Methylenchlorid oder Chloroform /Dichloressigsäure, wobei zur Erfindung auch solche Lösungsmittel und Gemische gehören, die eine Lösung erst bei Temperaturen oberhalb Raumtemperatur ergeben. Hierdurch ist wiederum eine mögliche Ausführungsform zur Herstellung von erfindungsgemäßen Pigmenten gegeben, nämlich die Kristallisation aus gegebenenfalls übersättigter Lösung (Ostwald sche Alterung) und gegebenenfalls in Gegenwart von Zusätzen, wie sie zur Herstellung konventioneller, absorbierender Pigmente üblich sind.

Die erfindungsgemäßen Polymeren sind über einen weiten Molekulargewichtsbereich erhältlich, ohne daß sie ihre charakterische Eigenschaft verlieren würden, nämlich cholesterische Phasen zu bilden.

Zweckmäßig weisen die Polymeren eine Lösungsviskosität (Staudinger Index) zwischen 0,1 und 20 dl/g auf. Besonders bevorzugt ist eine Lösungsviskosität im Bereich zwischen > 0,1 und < 10 dl/g, ganz besonders bevorzugt zwischen >0,1 und <2,0 dl/g. Für Oligomere kann die Lösungsviskosität (h in dl/g) auch unterhalb von 0,1 sein.

Bevorzugt für Werkstoffe ist ein Staudinger Index > 2 . Bevorzugt für Pigmente ist der Bereich zwischen 0,1 und 2.

Die Sprödigkeit der erfindungsgemäßen Polymere im ausgewählten Viskositätsbereich ist vorteilhaft für die Pigmentformgebung.

Gegenstand der vorliegenden Erfindung ist auch die Bereitstellung eines Herstellverfahrens für cholesterische Phasen bildende Polymere, vorzugsweise erfindungsgemäße, bei dem man mindestens einen bifunktionellen achiralen oder racemischen Molekülbaustein B, der wenigstens ein cyclisches Strukturelement aufweist, welches mindestens vier Ringglieder enthält, und mindestens einen bifunktionellen Molekülbaustein C, der chiral oder achiral, cyclisch oder acyclisch sein kann, wobei die Molekülbausteine B und C zusammen für sich allein befähigt sind LCP zu bilden, mit mindestens einem bifunktionellen chiralen Molekülbaustein A, der wenigstens ein von einer monosubstituierten p-Phenylengruppe verschiedenes cyclisches Strukturelement aufweist, umsetzt.

Auch hierbei kann der Baustein C aus den Gruppen A und B ausgewählt sein. Ein tatsächlich eingesetzter Baustein C ist jedoch von den gleichzeitig aus den Gruppen A und B konkret eingesetzten Molekülbausteinen verschieden.

In zweckmäßiger Verfahrensvariante stellt sich das Herstellungsverfahren relativ universell und einfach dar, da man in der Standardrezeptur eines beliebigen (nematischen) LCP 0,01 - 50 Mol-% eines oder mehrerer Monomerer durch die erfindungsgemäßen chiralen Bausteine zu ersetzen hat, um zu erfindungsgemäßen Polymeren zu gelangen.

Verschiedenste Ausführungsformen sind möglich. Abhängig vom angestrebten späteren Erscheinungsbild des Polymeren kann unter verschiedenen Varianten ausgewählt werden. Z.B. können aus der Gasphase abgeschiedene (aktivierte) Monomere einzeln oder im Gemisch auf einem Substrat in die erfindungsgemäßen Polymeren überführt werden.

Die erfindungsgemäßen Polymeren sind auch durch Polymerisation in Lösung (homogen und an Grenzflächen von mindestens zwei nicht mischbaren Medien) erhältlich.

In geeigneten Lösungsmitteln, die auch im überkritischen Zustand gehalten werden können, können erfindungsgemäße Polymere durch Polykondensation oder Polyaddition, welche beide zugleich oder nacheinander ausgeführt werden, erhalten werden. Hierbei ist es unerheblich, daß durch die allgemeine Schwerlöslichkeit des Polymeren die Lösung der Monomeren in eine Emulsion oder Suspension übergeht.

Bevorzugt sind jedoch Polykondensationsreaktionen in der Schmelze. Diese können auf verschiedenste Weise ausgeführt werden.

Für kontinuierliche oder diskontinuierliche Fahrweise sind Rührkessel, Reaktorkaskade oder auch speziell für viskose Medien Kneter kommerziell verfügbar und geeignet. Auch geeignet sind Reaktions- oder Entgasungsextruder und Kombinationen untereinander sowie mit vorgeschalteten Dünnfilmverdampfern oder Flashverdampfern.

Die Zugabe der Monomeren und gegebenenfalls eines oder mehrerer Aktivatoren kann generell in beliebiger Reihenfolge oder auch gleichzeitig erfolgen.

In einer bevorzugten Ausführungsform wird die chirale Komponente erst relativ spät dem Reaktionsgut zugesetzt, um einer prinzipiell möglichen Racemisierungsreaktion nicht unnötig Vorschub zu leisten.

Es ist auch möglich, ein Konzentrat der chiralen Komponente in Form eines Oligomeren oder Polymeren zuzusetzen, etwa im Sinne eines Masterbatch-Verfahrens, um Farbstoffe und andere Additive in Polymeren zu verteilen. Erfindungsgemäß sind also auch Gemische von nicht oder nicht vollständig äquilibrierten chiralen Oligomeren oder Polymeren in der völlig achiralen oder zumindest weniger stark chiralen Polymermatrix. Somit können die erfindungsgemäßen Oligomeren und Polymeren ebenfalls erfindungsgemäß als chirale Dotierstoffe für andere flüssigkristalline Materialien wirken.

Die ganz besonders bevorzugten chiralen Komponenten sind Dianhydrohexitole, nämlich Isosorbit, Isomannit, Isoidit. Diese können in nahezu beliebiger Form eingesetzt werden:

Chemiches Entwässern mit Keten, Acetanhydrid, Acetylchlorid. Bildung von Mono- und/oder Diacetat kann von Vorteil sein, weil es einen Reinigungseffekt mit sich bringt, wobei sich insbesondere Acetanhydrid für eine Art extraktive Veresterung aus wäßrigen Zubereitungen eignet.

Eine spezielle, bevorzugte Ausführungsform stellt die Non-Aqueous-Dispersion Polymerisation (siehe beispielsweise EP-O 276 915, auf die hiermit ausdrücklich Bezug genommen wird) dar.

Hier werden die Polymere durch Polykondensation der üblichen Monomeren in Gegenwart eines Nichtlösungsmittels und eines Emulgators schnell und schonend erhalten, wobei wohl die größere Oberfläche der Partikel vorteilhaft ist, um die leichter flüchtigen Reste der aktivierenden Agenzien, im einfachsten Fall Essigsäure, zu entfernen. Diese Ausführungsform ist auch geeignet, um Pigmentpartikel direkt zu erzeugen.

Es können jedoch auch unter Zuhilfenahme von Endgruppenbildnern niedrige Molekulargewichte und damit Viskositäten, im geringeren Umfang auch die Phasenumwandlungstemperaturen, auf die dem Fachmann bekannte Weise eingestellt werden.

Gegenstand der Erfindung sind auch Blends und Composites, enthaltend ein oder mehrere der hierin beschriebenen cholesterische Phasen bildende Polymere und/oder Oligomere.

Des weiteren umfaßt die Erfindung auch geformte Gebilde, die ein oder mehrere der hierin beschriebenen cholesterische Phasen bildende Polymere und/oder Oligomere enthalten.

Bevorzugt handelt es sich bei den geformten Gebilden um Spritzgußartikel, extrudierten Profile und Rohre, Folien, Bändchen, Blasfolien oder Fasern.

Schließlich sind auch Pigmente erfindungsgemäß, die ein oder mehrere Polymere und/oder Oligomere der hierin beschriebenen Art aufweisen.

Die erfindungsgemäßen Polymere eignen sich vor allem zum Beschichten von Substraten, die organisch oder anorganisch sein können. Die Polymere und Oligomere können unter anderem zur Herstellung eines schützenden, ästhetisch anspruchsvollen Oberflächenschutzes im Sinne eines organischen Email verwendet werden, der gut auf Metalloberflächen haftet.

Beispiele für anorganische Substrate sind Metalle, oxidische und nicht oxidische Keramiken, natürliche und synthetische Mineralien wie Glimmer und Ultramarin, und Kohlenstoff-Papiere und Kohlenstoff-Folien. Bei den beiden zuletzt genannten Substraten ist eine doppelseitige Beschichtung vorteilhaft, insbesondere, wenn diese anschließend zu Flittern oder Pigmente zermahlen auf einen silbrig glänzenden Untergrund aufgebracht werden.

Beispiele für organische Substrate sind u.a. Folien aus anderen Polymeren. Solche Folien können orientiert oder unorientiert sein. Bekannt sind neben axial auch biaxial orientierte Folien. Auch können alle diese Folientypen bereits einen Schichtaufbau aus mindestens zwei Schichten aufweisen. Interessant sind auch Folien, die durch ihren Mehrschichtlaminat- oder Mehrschichtextrudat-Aufbau aus Schichten unterschiedlichen Brechungsindizes bereits an sich einen irisierenden Effekt zeigen.

Es sind auch anorganische Substrate beschichtbar, die einen inneren Schichtaufbau besitzen, wie im Falle von speziellen Interferenzpigmenten mit mindestens einer metallischen Schicht und mindestens einer dielektischen Schicht.

Die Substrate können flächig ausgeformt sein, z. B. als quasikontinuierliche Folien oder mikroskopisch kleine Flitter oder Pigmente, oder auch mehr oder minder zweidimensional sein, z. B. Drähte oder Kugeln, die auch in einer oder mehreren Dimensionen elliptische oder wechselnde bzw. irreguläre Querschnitte aufweisen können. Die erfindungsgemäßen Pigmente zeigen praktisch alle von der Literatur (D2) beschriebenen Effekte, was im folgenden näher ausgeführt wird, und sind für die gleichen Verwendungen geeignet, ohne deren Nachteile aufzuweisen, wobei sie auf gänzlich anderen chemischen Strukturen basieren.

Die Pigmente zeigen eine vom Betrachtungswinkel abhängige Farbigkeit, wobei die Farbigkeit im einfachsten Fall nur auf einem Interferenzeffekt beruht, der zur Reflexion und nicht zur sonst für normale Pigmente üblichen Absorption führt.

In einer anderen Ausführungsform kann zusätzlich ein oder mehrere durch Absorption wirkende Farbstoffe oder Pigment(e) anwesend sein, wobei für mindestens einen der Farbstoffe die Möglichkeit besteht chemisch an die erfindungsgemäßen Polymeren gebunden zu sein, etwa im Sinne der Reaktivfarbstoffe, oder -falls er bifunktionell ist, z.B. Perylentetracarbonsäureanhydrid, auch als Baustein des Polymeren selbst. Für absorbierende Pigmente ist die einfache mechanische Mischung die bevorzugte Ausführungsform. Ein vorteilhaftes Beispiel ist Gasruß, der den nichtreflektierten Teil des Lichts des cholesterischen Pigments absorbiert und so den sonst nützlichen dunklen Grundlack zumindest teilweise überflüssig macht.

Spezielle Pigmentmischungen stellen auch solche dar, die erhalten werden, wenn erfindungsgemäße Pigmente verschiedener Selektivreflexion miteinander (mechanisch) gemischt werden. Diese Mischungen ermöglichen praktisch alle coloristischen Einstellungen.

Eine besondere Form der Beschichtung können Anwendungen als Lichtfilter in Fensterscheiben, Visieren und Sonnenbrillen sein.

Es gibt viele Möglichkeiten aus den erfindungsgemäßen Polymeren Flitter und Pigmente herzustellen:

Verdüsen, Beschichten, Ausnutzen des Skin Effekts (siehe z.b. J. Appl. Polym. Sci. 1995, 55, 1117), Abfeilen, Abschleifen, Ultraschall, als Thermoplast mit schichtbildenden Stoffen (Graphit, $MoS_2$ , Schichtsilikatel innig vermischen und so mahlen, daß einseitig beschichtete Plättchen entstehen.

Geformte Gebilde, wie Folien, Bändchen, Fasern, die auch andere Materialien enthalten können, sind unter anderem durch Coextrusion erhältlich.
Neben anderen Polymeren kann die Coextrusion auch mit anorganischen Materialien, insbesondere mit Drähten aus Metall oder Metall-Legierungen erfolgen.
Aus Fasern lassen sich flächige Gebilde, z.B. Nonwovens, wie Vliese, Gewirke und Gewebe erzeugen, die für technische, dekorative, textile und wegen der besonderen optischen Phänomene auch für Bekleidungszwecke geeignet sind.
Bevorzugt ist die Verarbeitung über die Schmelze, wie Extrusion (Strangextrusion / Blasextrusion) und Spritzguß, zu zwei- und dreidimensionalen Gebilden. Beispiele für spritzgegossene Artikel sind optische und lichttechnische Bauelemente, wie Filter und planare oder gekrümmte Spiegel, insbesondere Scheinwerfer-Reflektoren (Automobil bis Haushaltsartikel). Hierbei kann auch auf die sonst übliche und aufwendige Metallisierung entweder ganz oder zumindest teilweise verzichtet werden.
Beispiele für extrudierte Artikel sind Stäbe, Profile und Rohre mit besonderer Wertanmutung.
Eine mögliche Ausführungsform ist die Ausnützung des sog. Skin-Effekts, d. h. es wird ein heterogenes Polymerblend thermoplastisch derart umgeformt, daß sich die erfindungsgemäßen Polymeren -wahrscheinlich ohne an eine spezielle Theorie gebunden sein zu wollen- aufgrund Ihrer Rheologie auf der Oberfläche des geformten Artikels befinden. Der Kern wird folglich von mindestens einer nicht LCP-Phase gebildet.
Flitter und Pigmentpartikel finden Verwendung in Oberflächenbeschichtungen, wie Lacken, z.B. für Automobile, in Freizeitartikeln oder Kosmetikartikeln.
Auf die deutschen Patentanmeldungen 195 38 00.7, deren Priorität die vorliegende Anmeldung beansprucht, sowie auf die Zusammenfassung der vorliegenden Anmeldung wird hiermit ausdrücklich Bezug genommen.
Die nachfolgenden Ausführungsbeispiele dienen zur Veranschaulichung des Gegenstands der Erfindung:

Beispiel 1:

75,25 g (0,4 mol) 2-Hydroxy-6-naphthoesäure, 55,25 g (0,4 mol) 4-Hydroxybenzoesäure, 16,61 g (0,1 mol) Terephthalsäure und 14,61 g (0.1mol) 1,4:3,6-Dianhydro-D-sorbit (Isosorbid) werden mit 104,6 g (1,025 mol) Essigsäureanhydrid versetzt und mit einem leichten Stickstoffstrom durchspült. Die Mischung wird innerhalb von 15 Minuten auf 140 °C erhitzt und diese Temperatur dann für 20 Minuten gehalten. Danach wird die Temperatur innerhalb von 150 Minuten auf 320 °C erhöht. Ab ca. 220 °C fängt die Mischung an Essigsäure abzudestillieren. Nach dem Erreichen der 320 °C wird die Mischung für 60 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird mit Stickstoff belüftet und der Kolben mit dem Polymer in einem Eisbad abgekühlt. Nach dem Erkalten wird das Polymer isoliert.
Das Polymer hat eine kobaltblaue, brilliante Farbe. Die Farbe tritt schon während der Kondensation im Vakuum auf und bleibt auch nach dem Abkühlen erhalten.
Smp.= 170°C
intrinsische Viskosität = 0,26 dl/g
(gemessen in Pentafluorphenol/Hexafluorisopropanol)

Beispiel 2:

18,81 g (0,1 mol) 2-Hydroxy-6-naphthoesäure, 41,43 g (0,3 mol) 4-Hydroxybenzoesäure, 49,83 g (0.3 mol) Terephthalsäure, 18,61 g (0,1 mol) 4,4'-Dihydroxybiphenyl, 11,01 g (0,1 mol) Hydrochinon und 14,61 g (0,1mol) 1,4:3,6-Dianhydro-D-sorbit (Isosorbid) werden mit 104,6 g (1,025 mol) Essigsäureanhydrid versetzt und mit einem leichten Stickstoffstrom durchspült. Die Mischung wird innerhalb von 15 Minuten auf 140 °C erhitzt und diese Temperatur dann für 20 Minuten gehalten. Danach wird die Temperatur innerhalb von 150 Minuten auf 320 °C erhöht. Ab ca. 220 °C fängt die Mischung an Essigsäure abzudestillieren. Nach dem Erreichen der 320 °C wird die Mischung für 60 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird mit Stickstoff belüftet und der Kolben mit dem Polymer in einem Eisbad abgekühlt. Nach dem Erkalten wird das Polymer isoliert.
Während der Kondensation im Vakuum bekommt die Reaktionsmischung eine brilliant leuchtende, grün und

blau schimmernde Farbe. Nach dem Abkühlen ist das Polymer beige braun gefärbt. Bei einem erneuten Aufheizen der Probe auf mindestens 280 °C und einem Ausstreichen zu einem Film erhält man wieder den brillianten grün blauen Glanz. Wird das Polymer aus der Schmelze direkt abgeschreckt, zum Beispiel indem der Film in Wasser gegeben wird, so bleibt die brilliante Farbe erhalten. Bei frontaler Aufsicht erscheint der Film grün. Bei einem Abwinkeln des Films wird der Grünton mit zunehmendem Winkel immer blauer. Bei einer streifenden Ansicht erscheint der Film tief blau bis violett.
Smp.= 260°C
intrinsische Viskosität = 0,12 dl/g
(gemessen in Pentafluorphenol/Hexafluorisopropanol)

Beispiel 3:

37,62 g (0,2 mol) 2-Hydroxy-6-naphthoesäure, 96,68 g (0,7 mol) 4-Hydroxybenzoesäure, 8,31 g (0,05 mol) Terephthalsäure und 7,31 g (0,05mol) 1,4:3,6-Dianhydro-D-sorbit (Isosorbid) werden mit 104,6 g (1,025 mol) Essigsäureanhydrid versetzt und mit einem leichten Stickstoffstrom durchspült. Die Mischung wird innerhalb von 15 Minuten auf 140 °C erhitzt und diese Temperatur dann für 20 Minuten gehalten. Danach wird die Temperatur innerhalb von 150 Minuten auf 320 °C erhöht. Ab ca. 220 °C fängt die Mischung an Essigsäure abzudestillieren. Nach dem Erreichen der 320 °C wird die Mischung für 60 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird mit Stickstoff belüftet und der Kolben mit dem Polymer in einem Eisbad abgekühlt. Nach dem Erkalten wird das Polymer isoliert.

Während der Kondensation im Vakuum bekommt die Reaktionsmischung eine blau schimmernde Farbe, die sich aber beim langsamen Abkühlen verliert und in einen blassen Beigeton übergeht. Bei einem erneuten Aufheizen der Probe auf mindestens 280 °C und einem Ausstreichen zu einem Film erhält man wieder den brillianten blauen Glanz, der durch ein Abschrecken der Probe in kaltes Wasser fixiert werden kann. Die Probe erscheint bei frontaler Aufsicht blau, bei schrägem Blickwinkel jedoch tief violett.
Smp.= 250°C

Beispiel 4

282,18 g (1,5 mol) 2-Hydroxy-6-naphtoesäure, 345,3 g (2,5 mol) 4-Hydroxybenzoesäure, 86,09 g (0,5 mol) Cyclohexan-1,4-dicarbonsäure, 27,93 g (0,15 mol) 4,4'-Dihydroxibiphenyl und 51,15 g (0,35 mol) 14:3,6-Dianhydro-D-sorbit (Isosorbid) werden mit 528,8 g (5,11 mol) Essigsäureanhydrid versetzt und mit einem leichten Stickstoffstrom durchspült. Die Mischung wird innerhalb von 15 Minuten auf 140°C erhitzt und diese Temperatur dann für 20 Minuten gehalten. Danach wird die Temperatur innerhalb von 150 Minuten auf 320°C erhöht. Ab ca. 220°C fängt die Mischung an Essigsäure abzudestillieren. Nach dem Erreichen der 320°C wird die Mischung für 60 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird mit Stickstoff belüftet und der Kolben mit dem Polymer in einem Eisbad abgekühlt. Nach dem Erkalten wird das Polymer isoliert.

Das Polymer hat bei senkrechtem Anblick eine gold-grünliche, brilliante Farbe. Die Farbe tritt schon während der Kondensation im Vakuum auf und bleibt auch nach dem Abkühlen erhalten.

Beispiel 5

169,31 g (0,9 mol) 2-Hydroxy-6-naphtoesäure, 211,32 g (1,53 mol) 4-Hydroxybenzoesäure, 44,86 g (0,27 mol) Terephthalsäure, 9,25 g (0,06 mol) 3,5-Dihydroxybenzoesäure und 35,07 g (0,24 mol) 1,4:3,6-Dianhydro-D-sorbit (Isosorbid) werden mit 313,8 g (3,075 mol) Essigsäureanhydrid versetzt und mit einem leichten Stickstoffstrom durchspült. Die Mischung wird innerhalb von 15 Minuten auf 140°C erhitzt und diese Temperatur dann für 20 Minuten gehalten. Danach wird die Temperatur innerhalb von 150 Minuten auf 330°C erhöht. Ab gehalten. Danach wird die Temperatur innerhalb von 150 Minuten auf 330°C erhöht. Ab ca. 220°C fängt die Mischung an Essigsäure abzudestillieren. Nach dem Erreichen der 330°C wird die Mischung für 15 Minuten bei dieser Temperatur weitergerührt. Danach wird die Stickstoffspülung abgebrochen und Vakuum angelegt. Die Mischung wird für weitere 45 Minuten unter Vakuum (ca. 5 mbar) gerührt. Danach wird mit Stickstoff belüftet und der Kolben mit dem Polymer in einem Eisbad abgekühlt. Nach dem Erkalten wird das Polymer isoliert.

Das Polymer hat eine silbrig-blaue Farbe. Die Farbe tritt schon während der Kondensation im Vakuum auf und bleibt auch nach dem Abkühlen erhalten.

intrinsische Viskosität = 1,17 dl/g (gemessen in Pentafluorphenol /

Hexafluorisopropanol 1:1)

Beispiel 6

112,87 g (0,6 mol) 2-Hydroxy-6-naphtoesäure, 138,12 g (1 mol) 4-Hydroxybenzoesäure, 43,23 g (0,2 mol) Naphthalin-2,6-dicarbonsäure, 13,96 g (0,075 mol) 4,4'-Dihydroxybiphenyl und 18,26 g (0,125 mol) 1,4:3,6-Dianhydro-D-sorbit (Isosorbid) werden mit 209,71 g (2,05 mol) Essigsäureanhydrid versetzt und mit einem leichten Stickstoffstrom durchspült. Die Mischung wird innerhalb von 15 Minuten auf 140°C erhitzt und diese Temperatur dann für 20 Minuten gehalten. Danach wird die Temperatur innerhalb von 150 Minuten auf 330°C erhöht. Ab ca. 220°C fängt die Mischung an Essigsäure abzudestillieren. Nach dem Erreichen der 330°C wird die Mischung für 20 Minuten bei dieser Temperatur weitergerührt. Danach wird die Stickstoffspülung abgebrochen und Vakuum angelegt. Die Mischung wird für weitere 40 Minuten unter Vakuum (7 mbar) gerührt. Danach wird mit Stickstoff belüftet und der Kolben mit dem Polymeren in einem Eisbad abgekühlt. Nach dem Erkalten wird das Polymer isoliert.

Das Polymer hat eine sehr brilliante, gelb-gold grünliche Farbe. Die Farbe tritt schon während der Kondensation im Vakuum auf und bleibt auch nach dem Abkühlen erhalten.

Beispiel 7

56,43 g (0,3 mol) 2-Hydroxy-6-naphthoesäure, 69,06 g (0.5 mol) 4-Hydroxybenzoesäure, 16,61 g (0,1 mol) Terephthalsäure und 14,61 g 1,4:3,6-Dianhydro-D-mannit (Isomannit) werden mit 104,6 g (1,025 mol) Essigsäureanhydrid versetzt und mit einem leichten Stickstoffstrom durchspült. Die Mischung wird innerhalb von 15 Minuten auf 140°C erhitzt und diese Temperatur dann für 20 Minuten gehalten. Danach wird die Temperatur innerhalb von 150 Minuten auf 325°C erhöht. Ab ca. 220°C fängt die Mischung an Essigsäure abzudestillieren. Nach dem Erreichen der 325°C wird die Mischung für 30 Minuten bei dieser Temperatur weitergerührt. Danach wird die Stickstoffspülung abgebrochen und Vakuum angelegt. Die Mischung wird für weitere 30 Minuten unter Vakuum (3 mbar) gerührt. Danach wird mit Stickstoff belüftet und der Kolben mit dem Polymer in einem Eisbad abgekühlt. Nach dem Erkalten wird das Polymer isoliert.

Das Polymer hat eine türkis-blaue, brilliante Farbe. Die Farbe tritt schon während der Kondensation im Vakuum auf und bleibt auch nach dem Abkühlen erhalten.

Beispiel 8

47,03 g (0,25 mol) 2-Hydroxy-6-naphthoesäure, 34,53 g (0,25 mol) 4-Hydroxybenzoesäure, 41,53 g (0,25 mol) Terephthalsäure, 2,16 g (0,02 mol) p-Phenylendiamin, 12,72 g (0,06 mol) Dimethylbenzidin, 4,51 g (0,02 mol) Diaminobenzimidazol und 21,92 g (0,15 mol) 1,4:3,6-Dianhydro-D-sorbit (Isosorbid) werden mit 104,6 g (1,025 mol) Essigsäureanhydrid versetzt und mit einem leichten Stickstoffstrom durchspült. Die Mischung wird innerhalb von 15 Minuten auf 140°C erhitzt und diese Temperatur dann für 20 Minuten gehalten. Danach wird die Temperatur innerhalb von 150 Minuten auf 320°C erhöht. Ab ca. 220°C fängt die Mischung an Essigsäure abzudestillieren. Nach dem Erreichen der 320°C wird die Mischung für 60 Minuten bei dieser Temperatur weitergerührt. Danach wird die Stickstoffspülung abgebrochen und Vakuum angelegt. Die Mischung wird für weitere 30 Minuten unter Vakuum (ca. 5 mbar) gerührt. Danach wird mit Stickstoff belüftet und der Kolben mit dem Polymer in einem Eisbad abgekühlt. Nach dem Erkalten wird das Polymer isoliert.

Das Polymer hat eine grünlich blaue Farbe. Die Farbe tritt schon während der Kondensation im Vakuum auf und bleibt auch nach dem Abkühlen erhalten. Das Material ist sehr spröde.

Weitere Vorteile und Ausführungsformen der Erfindung ergeben sich aus den nachfolgenden Patentansprüchen.

## Patentansprüche

**1.** Cholesterische Phasen bildende Polymere und Oligomere, aufweisend als Molekülbausteine im wesentlichen

A. mindestens einen bifunktionellen chiralen Molekülbaustein, der wenigstens ein von der monosubstituierten p-Phenylengruppe verschiedenes cyclisches Strukturelementen aufweist,

B. mindestens einen bifunktionellen achiralen oder racemischen Molekülbaustein, der wenigstens ein cyclisches Struktruelement aufweist, welches mindestens vier Ringglieder enthält
ausgewählt aus der Gruppe
Terephthalsäure, Trifluormethyl-terephthalsäure, Fluorterephthalsäure, Chlorterephthalsäure, Bromterephthalsäure, Methoxyterephthalsäure,
Phenylterephthalsäure, Phenoxyterephthalsäure, Phenylthioterephthalsäure;
Isophthalsäure, 5-Sulfo-isophthalsäure, Dimethylcarbonat, Diphenylcarbonat, 4,4'-Azobenzoldicarbonsäure, 4,4'-Azoxybenzoldicarbonsäre;
C,N-Bis(4-Carboxyphenyl)azomethin;
Stilben-4,4'-dicarbonsäure, a-Methylstilben-4,4'-dicarbonsäure, Tolan-4,4'-dicarbonsäure, 2,5-Furan-dicarbonsäure, 2,5-Thiophen-dicarbonsäure, Thiadiazol-dicarbonsäuren, Pyridin-2,5-dicarbonsäure, Pyridin-2,5-dicarbonsäure, Pyrimidin-2, 5-dicarbonsäure;
2,6-Naphthalin-dicarbonsäure, 1,4-Naphthalin-dicarbonsäure;
3,3'-Biphenyl-dicarbonsäure, 4,4'-Biphenyl-dicarbonsäure, 2,2'-Biphenyl-dicarbonsäure, 2,4 '-Biphenyl-dicarbonsäure;
Fluoren-dicarbonsäuren, Fluorenon-dicarbonsäuren, 4,4'-Diphenylether-dicarbonsäure, 3,4'-Diphenylether-dicarbonsäure;
4,4'-Diphenylthioether-dicarbonsäure, 3,4'-Diphenylthioether-dicarbonsäure;
4,4'-Diphenylsulfon-dicarbonsäure, 4,4'-Diphenylsulfoxid-dicarbonsäure;
Tetrahydrofuran-2,3,4,5-tetracarbonsäure Perylen-3,4,9,10-tetracarbonsäure, insbesondere als Anhydrid, Naphthalin-1,4,5,8-tetracarbonsäure, insbesondere als Anhydrid;
Cyclohexan-1,4-dicarbonsäure i Cyclohexan-1,3-dicarbonsäure i Cyclohexan-1,4-dimethanol, Cyclohexan-1,3-dimethanol, Biscyclohexyl-4,4'-dicarbonsäure;
4-(4-Carboxyphenyl)-cyclohexancarbonsäure;
4-(4-Aminomethylcyclohexyl)anilin, 4-Hydroxybenzoesäure, 2-Hydroxynaphthalin-6-carbonsäure, 4-Hydroxyphenyl-benzoesäure, 2-Hydroxynaphthalin-4,5-dicarbonsäure, 2-Aminonaphthalin-4,5-carbonsäure, 2-Aminonaphthalin-6-carbonsäure, 4-Aminophenyl-benzoesäure;
Hydrochinon, Chlorhydrochinon, Resorcin, Brenzcatechin, 4,4'-Biphenol, 2,2'-Biphenol, 2,4'-Biphenol, Bisphenol A-Z;
Naphthalindiole, wie 2,6-Naphthalindiol, 1,4-Naphthalindiol, 1,5-Naphthalindiole, 1,2-Naphthalindiol, 1,3-Naphthalindiol, 1,6-Naphthalindiol, 2,3-Naphthalindiol, 2,7-Naphthalindiol;
4-Aminophenol, 4-Acetaminophenol, 3-Aminophenol, p-Phenylendiamin, m-Phenylendiamin;
Ethylenglykol und Bis(2-hydroxyethyl)terephthalat;
Cyclohexan-1,4-dimethanol, Cyclohexan-1,3-dimethanol, 1,4-Bis(hydroxymethyl)benzol, 1,3-Bis(hydroxymethyl)benzol, 4,4'-Dihydroxy-a-methyl-stilben, trans,trans-4,4'-Bicyclohexandiol, 2,6-Decalindimethanol, Cubandicarbonsäure, Biscubandicarbonsäure;
Bicyclododecandicarbonsäure, Bicyclododecandimethanol;
Dibenzodioxin-2,7-dicarbonsäure, Dibenzodioxin-2,3,6,7-tetracarbonsäure, Thianthren-2,7-dicarbonsäure, Thianthren-2,3,6,7-tetracarbonsäure

C. mindestens einen bifunktionellen Molekülbaustein, der beliebig chiral oder achiral, cyclisch oder acyclisch sein kann und von den tatsächlich eingesetzten Molekülbausteinen A und B verschieden ist
ausgewählt aus der Gruppe

Lithocholsäure, Hydroxycarbonsäuren, wie 4-Hydroxybenzoesäure 1,2,3,4,4a,9,10,10a-octahydro-7-hydroxy-1,4a-dimethylphenanthrencarbonsäure, Aminophenole, insbesondere N-Acyl- bzw. N-Acyl-N-alkylderivate, Aminoalkohole, Aminocarbonsäuren, Aminodicarbonsäuren, Aminoaldehyde, Hydroxyaldehyde, 4-Hydroxybenzoesäure, 2-Hydroxynaphthalin-6-carbonsäure, 4-Hydroxyphenyl-benzoesäure, 2-Hydroxynaphthalin-4,5-dicarbonsäure, 2-Aminonaphthalin-4,5-carbonsäure, 2-Aminonaphthalin-6-carbonsäure, 4-Aminophenyl-benzoesäure;
Hydroxynaphthylamin 4-Aminophenol, 4-Acetaminophenol, 3-Aminophenol,
wobei die Molekülbausteine durch Estergruppierungen mit (C=O)= und O-C = O, Kohlensäureester mit O-(C = O) -O, Amidgruppen CONH, N-substituiertes Amid CONR, cyclisches Imid mit sechs Ringgliedern, Azomethine CH = N und CR = N verbunden sind, wobei der Rest R gleich oder verschieden $C_1$-$C_{22}$-Alkyl, -Aryl, -Aralkyl sein kann, wobei im Falle eines nicht cyclischen Restes oder im Falle des Vorliegens einer Kombination mit einem nicht cyclischen Restes der nicht cyclische Anteil linear oder verzweigt sein kann, und wobei sowohl lineare, verzweigte und/oder cyclische Reste mindestens ein von C und H verschiedenes Heteroatom enthalten können und/oder substituiert - auch heteroatomsubstituiert - sein können, wobei der Substituent insbesondere auch ein oder mehrere Halogen(e) tragen kann, mit der Maßgabe, daß sich der Molekülbaustein A nicht ausschließlich von Camphersäure ableitet.

2. Polymer nach Anspruch 1, **dadurch gekennzeichnet, daß** es den Molekülbaustein A zu 0,01 bis 50 Mol-% enthält, bezogen auf.die Summe der Mole der Molekülbausteine A, B und C.

3. Polymer nach Anspruch 1 oder 2, **dadurch gekennzeichnet, daß** es eine Lösungsviskosität (Staudinger Index) zwischen 0,01 und 2,0 dl/g aufweist.

4. Polymer nach Anspruch 3, **dadurch gekennzeichnet, daß** es eine Lösungsviskosität zwischen > 0,1 und < 1,0 dl/g aufweist.

5. Blends und Composites enthaltend ein oder mehrere Polymere und/oder Oligomere gemäß einem oder mehreren der Ansprüche 1 bis 4.

6. Geformte Gebilde enthaltend ein oder mehrere Polymere und/oder Oligomere gemäß einem oder mehreren der Ansprüche 1 bis 4.

7. Geformte Gebilde nach Anspruch 6, ausgewählt aus der Gruppe der Spritzgußartikel, extrudierten Profile und Rohre, Folien, Bändchen, Blasfolien oder Fasern.

8. Pigmente, aufweisend ein oder mehrere Polymere und/oder Oligomer gemäß einem oder mehreren der Ansprüche 1 bis 4.

9. Verwendung der cholesterische Phasen bildenden Polymere nach den Ansprüchen 1 bis 4 als farbige LCP.

10. Verwendung der cholesterische Phasen bildenden Polymere nach den Ansprüchen 1 bis 4 zur Herstellung von Spritzgußartikeln, extrudierten Profilen und Rohren, Folien, Bändchen, Blasfolien oder Fasern.

11. Verwendung der cholesterische Phasen bildenden Polymere nach den Ansprüchen 1 bis 4 zur Beschichtung von Oberflächen.

## Claims

1. A polymer or oligomer which forms cholesteric phases, essentially consisting, as molecular building blocks, of

A. at least one bifunctional chiral molecular building block which contains at least one cyclic structural element other than a monosubstituted p-phenylene group,

B. at least one bifunctional achiral or racemic molecular building block which contains at least one cyclic structural element containing at least four ring members,
selected from the group consisting of
terephthalic acid, trifluoromethylterephthalic acid, fluoroterephthalic acid, chloroterephthalic acid, bromoterephthalic acid, methoxyterephthalic acid, phenylterephthalic acid, phenoxyterephthalic acid, phenylthioterephthalic acid;
isophthalic acid, 5-sulfoisophthalic acid;
dimethyl carbonate, diphenyl carbonate;
4,4'-azobenzenedicarboxylic acid, 4,4'-azoxybenzenedicarboxylic acid;
C,N-bis(4-carboxyphenyl)azomethine;
stilbene-4,4'-dicarboxylic acid, a-methylstilbene-4,4'-dicarboxylic acid, tolan-4,4'-dicarboxylic acid, 2,5-furandicarboxylic acid, 2,5-thiophenedicarboxylic acid, thiadiazoledicarboxylic acids;
pyridine-2,5-dicarboxylic acid, pyridine-2,5-di-carboxylic acid, pyrimidine-2,5-dicarboxylic acid;
2,6-naphthalenedicarboxylic acid, 1,4-naphthalenedicarboxylic acid;
3,3'-biphenyldicarboxylic acid, 4,4'-biphenyldicarboxylic acid, 2,2'-biphenyldicarboxylic acid, 2,4'-biphenyldicarboxylic acid;
fluorenedicarboxylic acids, fluorenonedicarboxylic acids, 4,4'-oxydibenzoic acid, 3,4'-oxydibenzoic acid;
4,4'-thiodibenzoic acid, 3,4'-thiodibenzoic acid;
4,4'-sulfonyldibenzoic acid, 4,4'-sulfinyldibenzoic acid;

tetrahydrofuran-2,3,4,5-tetracarboxylic acid, perylene-3,4,9,10-tetracarboxylic acid, in particular as the anhydride, naphthalene-1,4,5,8-tetracarboxylic acid, in particular as the anhydride;
cyclohexane-1,4-dicarboxylic acid;
cyclohexane-1,3-dicarboxylic acid;
cyclohexane-1,4-dimethanol, cyclohexane-1,3-dimethanol, biscyclohexyl-4,4'-dicarboxylic acid;
4-(4-carboxyphenyl)cyclohexanecarboxylic acid;
4-(4-aminomethylcyclohexyl)aniline, 4-hydroxybenzoic acid, 2-hydroxynaphthalene-6-carboxylic acid, 4-hydroxyphenylbenzoic acid, 2-hydroxynaphthalene-4,5-dicarboxylic acid, 2-aminonaphthalene-4,5-carboxylic acid, 2-aminonaphthalene-6-carboxylic acid, 4-aminophenylbenzoic acid;
hydroquinone, chlorohydroquinone, resorcinol, pyrocatechol, 4,4'-biphenol, 2,2'-biphenol, 2,4'-biphenol, bisphenol A-Z;
naphthalenediols, such as 2,6-naphthalenediol, 1,4-naphthalenediol, 1,5-naphthalenediols, 1,2-naphthalenediol, 1,3-naphthalenediol, 1,6-naphthalenediol, 2,3-naphthalenediol, 2,7-naphthalenediol;
4-aminophenol, 4-acetaminophenol, 3-aminophenol, p-phenylenediamine, m-phenylenediamine;
ethylene glycol and bis(2-hydroxyethyl) terephthalate;
cyclohexane-1,4-dimethanol, cyclohexane-1,3-dimethanol, 1,4-bis(hydroxymethyl)benzene, 1,3-bis(hydroxymethyl)benzene, 4,4'-dihydroxy-a-methylstilbene, trans,trans-4,4'-bicyclohexanediol, 2,6-decalindimethanol, cubanedicarboxylic acid, biscubanedicarboxylic acid;
bicyclododecanedicarboxylic acid, bicyclododecanedimethanol;
dibenzodioxin-2,7-dicarboxylic acid, dibenzodioxin-2,3,6,7-tetracarboxylic acid, thianthrene-2,7-dicarboxylic acid, thianthrene-2,3,6,7-tetracarboxylic acid,

C. at least one bifunctional molecular building block which can be either chiral or achiral, cyclic or acyclic, and is different from the molecular building blocks A and B actually employed,

selected from the group consisting of lithocholic acid, hydroxycarboxylic acids, such as 4-hydroxybenzoic acid, 1,2,3,4,4a,9,10,10a-octahydro-7-hydroxy-1,4a-dimethylphenanthrenecarboxylic acid, aminophenols, especially N-acyl- or N-acyl-N-alkyl derivatives, aminoalcohols, aminocarboxylic acids, aminodicarboxylic acids, aminoaldehydes, hydroxyaldehydes, 4-hydroxybenzoic acid, 2-hydroxynaphthalene-6-carboxylic acid, 4-hydroxyphenylbenzoic acid, 2-hydroxynaphthalene-4,5-dicarboxylic acid, 2-aminonaphthalene-4,5-carboxylic acid, 2-aminonaphthalene-6-carboxylic acid, 4-aminophenylbenzoic acid;
hydroxynaphthylamine, 4-aminophenol, 4-acetaminophenol, 3-aminophenol,
where the molecular building blocks are linked by ester groups containing (C=O)= and O-C=O, carbonic esters containing O-(C=O)-O, amide groups CONH, N-substituted amide CONR, cyclic imide containing six ring members, azomethines CH=N and CR=N, where the radicals R may be identical or different and are $C_1$-$C_{22}$-alkyl, -aryl or -aralkyl, where, in the case of an acyclic radical or in the case of the presence of a combination with an acyclic radical, the acyclic part may be linear or branched, and where both linear, branched and/or cyclic radicals can contain at least one heteroatom other than C and H and/or may be substituted - including heteroatom-substituted - where the substituent can, in particular, also carry one or more halogen(s),
with the proviso that the molecular building block A is not derived exclusively from camphoric acid.

**2.** A polymer as claimed in claim 1, which comprises from 0.01 to 50 mol% of the molecular building block A, based on the total number of moles of molecular building blocks A, B and C.

**3.** A polymer as claimed in claim 1 or 2, which has a solution viscosity (Staudinger index) of between 0.01 and 2.0 dl/g.

**4.** A polymer as claimed in claim 3, which has a solution viscosity of between > 0.1 and < 1.0 dl/g.

**5.** A blend or composite comprising one or more polymers and/or oligomers as claimed in one or more of claims 1 to 4.

**6.** A shaped structure comprising one or more polymers and/or oligomers as claimed in one or more of claims 1 to 4.

**7.** A shaped structure as claimed in claim 6, selected from the group consisting of injection-molded articles, extruded profiles and pipes, films, tapes, blown films and fibers.

**8.** A pigment comprising one or more polymers and/or oligomers as claimed in one or more of claims 1 to 4.

**9.** The use of a polymer which forms cholesteric phases as claimed in claims 1 to 4 as a colored LCP.

10. The use of a polymer which forms cholesteric phases as claimed in claims 1 to 4 for the production of injection-molded articles, extruded profiles and pipes, films, tapes, blown films or fibers.

11. The use of a polymer which forms cholesteric phases as claimed in claims 1 to 4 for coating surfaces.

**Revendications**

1. Polymères et oligomères formant des phases cholestériques, ayant comme unités constitutives essentiellement

A. au moins une unité constitutive chirale bifonctionnelle contenant au moins un élément de structure cyclique différent d'un groupe p-phénylène monosubstitué,
B. au moins une unité constitutive bifonctionnelle achirale ou racémique contenant au moins un élément de structure cyclique d'au moins 4 chaînons cycliques, choisi dans le groupe constitué par
l'acide téréphtalique, l'acide trifluorométhyltéréphtalique, l'acide fluorotéréphtalique, l'acide chlorotéréphtalique, l'acide bromotéréphtalique, l'acide méthoxytéréphtalique, l'acide phényltéréphtalique, l'acide phénoxytéréphtalique, l'acide phénylthiotéréphtalique;
l'acide isophtalique, l'acide 5-sulfoisophtalique;
le carbonate de diméthyle, le carbonate de diphényle, l'acide 4,4'-azobenzènedicarboxylique, l'acide 4,4-azoxybenzènedicarboxylique;
le C,N-bis(4-carboxyphényl)azométhine;
l'acide stilbène-4,4'-dicarboxylique, l'acide α-méthylstilbène-4,4'-dicarboxylique, l'acide tolane-4,4'-dicarboxylique, l'acide 2,5-furanedicarboxylique, l'acide 2,5-thiophènedicarboxylique, les acides thiadiazoledicarboxyliques, l'acide pyridine-2,5-dicarboxylique, l'acide pyrimidine-2,5-dicarboxylique;
l'acide 2,6-naphtalènedicarboxylique, l'acide 1,4-naphtalènedicarboxylique;
l'acide 3,3'-biphényldicarboxylique, l'acide 4,4'-biphényldicarboxylique, l'acide 2,2'-biphényldicarboxylique, l'acide 2,4'-biphényldicarboxylique;
les acides fluorènedicarboxyliques, les acides fluorénonedicarboxyliques;
l'acide 4,4'-diphénylétherdicarboxylique, l'acide 3,4'-diphénylétherdicarboxylique;
l'acide 4,4'-diphénylthioétherdicarboxylique, l'acide 3,4'-diphénylthioétherdicarboxylique;
l'acide 4,4'-diphénylsulfonedicarboxylique, l'acide 4,4'-diphénylsulfoxydedicarboxylique;
l'acide tétrahydrofurane-2,3,4,5-tétracarboxylique, l'acide pérylène-3,4,9,10-tétracarboxylique, en particulier sous forme d'anhydride, l'acide naphtalène-1,4,5,8-tétracarboxylique, en particulier sous forme d'anhydride;
l'acide cyclohexane-1,4-dicarboxylique, l'acide cyclohexane-1,3-dicarboxylique;
le cyclohexane-1,4-diméthanol, le cyclohexane-1,3-diméthanol, l'acide biscyclohexyl-4,4'-dicarboxylique;
l'acide 4-(4-carboxyphényl)cyclohexanecarboxylique;
la 4-(4-aminométhylcyclohexyl)aniline, l'acide 4-hydroxybenzoïque, l'acide 2-hydroxynaphtalène-6-carboxylique, l'acide 4-hydroxyphénylbenzoïque, l'acide 2-hydroxynaphtalène-4,5-dicarboxylique, l'acide 2-aminonaphtalène-4,5-dicarboxylique, l'acide 2-aminonaphtalène-6-carboxylique, l'acide 4-aminophénylbenzoïque;
l'hydroquinone, la chlorohydroquinone, le résorcinol, le pyrocatéchol, le 4,4'-biphénol, le 2,2'-biphénol, le 2,4'-biphénol, le bisphénol A-Z;
les naphtalènediols comme le 2,6-naphtalènediol, le 1,4-naphtalènediol, le 1,5-naphtalènediol, le 1,2-naphtalènediol, le 1,3-naphtalènediol, le 1,6-naphtalènediol, le 2,3-naphtalènediol, le 2,7-naphtalènediol;
le 4-aminophénol, le 4-acétaminophénol, le 3-aminophénol, la p-phénylènediamine, la m-phénylènediamine;
l'éthylèneglycol et le téréphtalate de bis(2-hydroxyéthyle);
le cyclohexane-1,4-diméthanol, le cyclohexane-1,3-diméthanol, le 1,4-bis-(hydroxyméthyl)benzène, le 1,3-bis(hydroxyméthyl)benzène, le 4,4'-dihydroxy-α-méthylstilbène, le trans,trans-4,4'-bicyclohexanediol, le 2,6-décalinediméthanol, l'acide cubanedicarboxylique, l'acide biscubanedicarboxylique;
l'acide bicyclododécanedicarboxylique, le bicyclododécanediméthanol;
l'acide dibenzodioxine-2,7-dicarboxylique, l'acide dibenzodioxine-2,3,6,7-tétracarboxylique, l'acide thianthrène-2,7-dicarboxylique, l'acide thianthrène-2,3,6,7-tétracarboxylique;
C. au moins une unité constitutive bifonctionnelle qui peut être indifféremment chirale ou achirale, cyclique ou acyclique, et qui est différente des unités constitutives A et B effectivement utilisées, choisie dans le groupe constitué par l'acide lithocholique, des acides hydroxycarboxyliques comme l'acide 4-hydroxybenzoïque, l'acide 1,2,3,4,4a,9,10.1 Oa-octahydro-7-hydroxy-1,4a-diméthylphénanthrènecarboxylique, des aminophénols, en particulier des dérivés N-acyl ou N-acyl-N-alkyl, des aminoalcools, des acides aminocarboxyliques, des acides aminodicarboxyliques, des aminoaldéhydes, des hydroxyaldéhydes, l'acide 4-hydroxybenzoïque, l'acide 2-hydroxynaphtalène-6-carboxylique, l'acide 4-hydroxyphénylbenzoïque, l'acide 2-hydroxynaphtalène-4,5-dicarboxylique, l'acide 2-aminonaphtalène-4,5-dicarboxylique, l'acide 2-aminonaphtalène-6-carboxylique, l'acide 4-aminophénylbenzoïque, l'hydroxynaphtylamine, le 4-aminophénol, le 4-acétaminophénol, le 3-aminophénol,

les unités constitutives étant liées par l'intermédiaire de groupes ester avec (C=O)= et O-C=O, de groupes ester d'acide carbonique avec O-(C=O)-O, de groupes amide CONH, de groupes amide N-substitué CONR, de groupes imide cyclique de 6 chaînons cycliques, de groupes azométhine CH=N et CR=N, les restes R pouvant être des groupes allyle, aryle ou aralkyle en $C_1$-$C_{22}$ identiques ou différents, dans lesquels, dans le cas d'un reste non cyclique ou dans le cas de la présence d'une combinaison avec un reste non cyclique, la partie non cyclique peut être linéaire ou ramifiée, et les restes linéaires, ramifiés et/ou cycliques peuvent contenir au moins un hétéroatome différent de C et H et/ou peuvent être substitués, y compris substitués par un hétéroatome, le substituant pouvant aussi en particulier porter un ou plusieurs atomes d'halogène,
à condition que l'unité constitutive A ne dérive pas exclusivement de l'acide camphorique.

**2.** Polymère selon la revendication 1, **caractérisé en ce qu'**il contient 0,01 à 50 % en mol de l'unité constitutive A par rapport à la somme en mol des unités constitutives A, B et C.

**3.** Polymère selon la revendication 1 ou 2, **caractérisé en ce qu'**il a une viscosité en solution (indice de Staudinger) comprise entre 0,01 et 2,0 dl/g.

**4.** Polymère selon la revendication 3, **caractérisé en ce qu'**il a une viscosité en solution comprise entre > 0,1 et < 1,0 dl/g.

**5.** Mélanges et composites contenant un ou plusieurs polymères et/ou oligomères selon l'une ou plusieurs des revendications 1 à 4.

**6.** Articles moulés contenant un ou plusieurs polymères et/ou oligomères selon l'une ou plusieurs des revendications 1 à 4.

**7.** Articles moulés selon la revendication 6, choisis dans le groupe constitué par des articles moulés par injection, des profilés et des tubes extrudés, des feuilles, des bandelettes, des feuilles soufflées ou des fibres.

**8.** Pigments contenant un ou plusieurs polymères et/ou oligomères selon l'une ou plusieurs des revendications 1 à 4.

**9.** Utilisation des polymères formant des phases cholestériques selon les revendications 1 à 4 comme polymères cristaux liquides colorés.

**10.** Utilisation des polymères formant des phases cholestériques selon les revendications 1 à 4 pour la fabrication d'articles moulés par injection, de profilés et de tubes extrudés, de feuilles, de bandelettes, de feuilles soufflées ou de fibres.

**11.** Utilisation des polymères formant des phases cholestériques selon les revendications 1 à 4 pour le revêtement de surfaces.